# EUROPEAN PATENT APPLICATION

(11) **EP 3 808 952 A1**
(43) Date of publication of application: **21.04.2021**
(21) Application number: 19833340.3
(22) Date of filing: 11.07.2019
(51) Int. Cl.: F02B 23/08, F02B 23/10, F02B 31/00, F02F 1/00, F02M 26/20

(54) **SPARK-IGNITION ENGINE UNIT AND VEHICLE**

(30) Priority: 12.07.2018 JP 2018132368
(71) Applicant: Yamaha Hatsudoki Kabushiki Kaisha, Iwata-shi, Shizuoka 438-8501 (JP)
(72) Inventor: YOSHINO, Masayuki, Iwata-shi, Shizuoka 438-8501 (JP); NAGAI, Yoshitaka, Iwata-shi, Shizuoka 438-8501 (JP); TANOKURA, Hayato, Iwata-shi, Shizuoka 438-8501 (JP)
(74) Representative: Stöckeler, Ferdinand
(86) International application number: PCT/JP2019/027558
(87) International publication number: WO 2020/013291

(57) **Abstract**

The present teaching provides a spark-ignition type engine unit having an enhanced degree of freedom in designing a distribution of exhaust gas in a combustion chamber and a vehicle. The spark-ignition type engine unit includes a cylinder part, a piston part, a crankshaft, one exhaust port, one single center tumble port, one exhaust valve, one intake valve, an ignition plug, a throttle body, an intake pipe, an exhaust pipe, and an exhaust recirculation passage. The exhaust recirculation passage supplies recirculation gas, which is part of exhaust gas, to the intake pipe or single center tumble port so that, when the intake valve opens the gas inlet, the recirculation gas is introduced via the single center tumble port together with gas having flowed through the throttle body, the intake pipe, and the one single center tumble port without through a surge tank to generate a tumble flow in the combustion chamber.

## Description

### Technical Field

The present teaching relates to a spark-ignition type engine unit and a vehicle.

### Background Art

As a spark-ignition type engine unit, an engine unit configured to recirculate some exhaust gas to an intake system has been known.

For example, Patent Literature 1 (hereinafter, referred to as PTL 1) discloses a spark-ignition type engine including an ignition plug. This engine includes two gas inlets opened to a combustion chamber, intake ports respectively communicating with the gas inlets, one gas outlet, and an exhaust port communicating with the gas outlet. Additionally, the engine includes an intake system connected to the intake ports and an exhaust recirculation path serving as an exhaust recirculation passage connecting the intake system and the exhaust port. The exhaust gas passing through the exhaust port is partially recirculated to the intake system through the exhaust recirculation path. The exhaust gas thus recirculated is introduced into a combustion chamber through the paired gas inlets.

For another example, Patent Literature 2 (hereinafter, referred to as PTL 2) discloses an engine provided with an exhaust gas recirculation device. This engine includes two intake ports and two exhaust ports. The exhaust gas recirculation device includes an intake tank to which intake gas is supplied and an exhaust-gas recirculation (EGR) tank to which exhaust gas from the engine is supplied. The exhaust gas in the EGR tank is introduced into the intake tank so as to be mixed with the intake gas.

PTL 2 proposes a configuration in which the exhaust gas (recirculation gas) is uniformly supplied to the intake ports of the engine. Specifically, according to the exhaust gas recirculation device of PTL 2, the EGR tank, to which the exhaust gas is supplied, is integrated with the intake tank, which serves as a surge tank. Additionally, a communication hole is provided between the intake tank and the EGR tank. Through the communication hole, exhaust gas is introduced into the intake tank from the EGR tank. The exhaust gas having passed through the communication hole is mixed with fresh air, and the resulting mixture is stored in the intake tank (surge tank). This uniformizes the exhaust gas in the gas that is to be supplied to the engine.

### Citation List

### Patent Literature

PTL 1: Japanese Patent No. 4119281
PTL 2: Japanese Patent Application Laid-Open No. 2009-144653

### Summary of Invention

### Technical Problem

In the spark-ignition type engine unit including the exhaust recirculation passage, the distribution of the exhaust gas having passed the exhaust recirculation passage and the fresh air in the combustion chamber may sometimes be requested to be made suitable for a desired combustion state. Thus, the spark-ignition type engine unit including the exhaust recirculation passage is required to have a higher degree of freedom in designing the distribution of the exhaust gas in the combustion chamber.

The present teaching provides a spark-ignition type engine unit having a higher degree of freedom in designing a distribution of exhaust gas in a combustion chamber and a vehicle.

### Solution to Problem

The gas that is to be introduced into the combustion chamber is the mixture of the exhaust gas (recirculation gas) and the fresh air. An oxygen concentration in the exhaust gas is lower than that in the fresh air. Meanwhile, a carbon dioxide concentration in the exhaust gas is higher than that in the fresh air. The distribution of the oxygen concentration and the carbon dioxide concentration gives great effects on combustion in the combustion chamber and on increase in temperature caused by the combustion.

In view of this, PTL 2 proposes a configuration for uniformizing exhaust gas, for example. The engine disclosed in PTL 2 is designed to uniformize the exhaust gas by making use of the structure of the surge tank.

However, an engine or an engine unit without a surge tank cannot achieve the distribution controlled by making use of the structure of the surge tank (uniformization herein).

The inventors of the present teaching further studied the distribution of the exhaust gas in the combustion chamber, and found the following fact.

The uniform distribution of the exhaust gas in the combustion chamber is not always optimum for combustion. For example, depending on the position of the ignition plug in the combustion chamber, an uneven distribution of exhaust gas in the combustion chamber may sometimes be preferable. Assume a case where the ignition part of the ignition plug is positioned at a location shifted from the center of the combustion chamber when viewed in the reciprocation direction of the piston, for example. In this case, it is preferable that fresh air and exhaust gas be distributed in the combustion chamber as below. Most of the fresh air is distributed in the vicinity of the ignition part, and most of the exhaust gas, which has a high specific heat capacity, is distributed in an area separated away from the ignition plug.

In view of this, the inventors studied a configuration of deliberately providing an uneven distribution of exhaust gas in a combustion chamber. Then, the inventors found that, by making use of a tumble flow generated by a tumble port, it becomes easier to maintain the unevenness in the distribution of the exhaust gas in the combustion chamber.

A two-valve engine including one intake valve and one exhaust valve has one tumble port. With a configuration in which a single center tumble port (SCTP), through which gas is supplied to the combustion chamber, is provided with a separation enhancing part for separating gas from a wall surface, a fast tumble flow can be generated by the gas supplied to the combustion chamber. The one tumble port has a gas inlet whose area can be greater than each of those in a configuration including a plurality of gas inlets. Thus, after the gas enters the combustion chamber through the one intake port, which has the one gas inlet configured to be opened by the one intake valve, i.e., through the single tumble port, a major part of the gas generates a single large flow directed from the gas inlet to the gas outlet when viewed in a reciprocation direction of the piston.

For example, in a configuration including plural gas inlets and plural tumble ports respectively communicating with the plural gas inlets, as those disclosed by PTL 1 and PTL 2, plural flows of gas introduced from the plural gas inlets collide with each other in a center portion of a combustion chamber when viewed in a reciprocation direction of the piston. This causes turbulence in the air flow, thus facilitating mixing of the gas.

On the other hand, in a two-valve engine provided with one single tumble port, a tumble flow with less turbulence is generated. This facilitates formation of stratification of exhaust gas and fresh air, the stratification reflecting a distribution of exhaust gas supplied to the tumble port. That is to say, this configuration tends to suppress or reduce turbulence in the tumble flow. Thus, with the configuration in which the exhaust gas is supplied to the intake pipe that is disposed upstream of the tumble port in the gas flow direction and that is provided without a surge tank, the distribution of the exhaust gas supplied from the intake pipe to the single center tumble port tends to be reflected to the distribution of the exhaust gas in the combustion chamber.

Conversely, since the tumble flow is revolving in the combustion chamber and thus causes the gas in the combustion chamber to move fast, the gas in the combustion chamber tends to be partially uniformized. Thus, by suitably changing the merging location of the exhaust gas in the intake pipe, it is possible to yield uniform dispersion of the exhaust gas in the combustion chamber.

As described above, the inventors found that it is possible to enhance the degree of freedom in designing the distribution of the exhaust gas in the combustion chamber of the spark-ignition type engine.

Based on the above-described pieces of knowledge, a spark-ignition type engine according to an aspect of the present teaching having the following features was completed:

(1) A spark-ignition type engine unit including:
a cylinder part including a combustion chamber;
a piston part provided in the cylinder part, the piston part being movable in a reciprocating manner, the piston part defining the combustion chamber together with the cylinder part;
a crankshaft connected to the piston part, the crankshaft being rotatable in conjunction with reciprocating movement of the piston part;
one exhaust port that is provided to the cylinder part and communicates with the combustion chamber via a gas outlet, the one exhaust port being configured to allow exhaust gas from the combustion chamber to pass through the exhaust port;
one single center tumble port that is provided to the cylinder part and communicates with the combustion chamber via a gas inlet, the one single center tumble port having a separation enhancing part configured to cause gas being flown to the gas inlet to flow separate away from a wall surface leading to the gas inlet such that a tumble flow tumbling about an axis that extends in a direction intersecting the reciprocation direction is imparted to gas taken into the combustion chamber through the gas inlet, the gas inlet having an extending area that covers the gas outlet, the extending area being defined as an area having a width equal to a width of the gas inlet and extending from the gas inlet in a gas intake direction when viewed in the reciprocation direction of the piston part;
one exhaust valve configured to open or close the gas outlet;
one intake valve configured to open or close the gas inlet;
an ignition plug including an ignition part disposed in the combustion chamber, the ignition plug being configured to spark-ignite gas in the combustion chamber;
a throttle body including a throttle valve configured to regulate a flow rate of gas that is to be introduced into the combustion chamber;
an intake pipe connecting without a surge tank, the throttle body and the one single center tumble port, the intake pipe allowing gas to pass through the intake pipe so that the gas travels from the throttle body to the one single center tumble port;
an exhaust pipe connected to an end of the one exhaust port, the end being opposite to the gas outlet, the exhaust pipe allowing exhaust gas discharged via the one exhaust port to pass through the exhaust pipe; and
an exhaust recirculation passage connecting the exhaust pipe or the exhaust port and the intake pipe or the single center tumble port, the exhaust recirculation passage being configured to supply recirculation gas, which is some of the exhaust gas taken out from the exhaust pipe or the exhaust port, to the intake pipe or the one single center tumble port so that, when the one intake valve opens the gas inlet, the recirculation gas is introduced via the separation enhancing part and the one single center tumble port together with gas having flowed through the throttle body, the intake pipe, and the one single center tumble port, without passing through a surge tank, to generate the tumble flow in the combustion chamber.

The spark-ignition type engine unit according to (1) includes the cylinder part, the piston part, the crankshaft, the one exhaust port, the one single center tumble port, the one exhaust valve, the one intake valve, the ignition plug, the throttle body, the intake pipe, the exhaust pipe, and the exhaust recirculation passage.

The piston part is provided in the cylinder part, and is movable in a reciprocating manner. The piston part defines the combustion chamber together with the cylinder part. The crankshaft is connected to the piston part, and is rotatable in conjunction with reciprocating movement of the piston part. The exhaust port is provided to the cylinder part, and communicates with the combustion chamber via the gas outlet. The exhaust gas from the combustion chamber passes through the exhaust port. The single center tumble port is provided to the cylinder part, and communicates with the combustion chamber via the gas inlet. The single center tumble port has a structure for causing the intake gas introduced into the combustion chamber through the gas inlet to generate a tumble flow around the axial line extending in the direction intersecting the reciprocation direction. The single center tumble port (SCTP) has the separation enhancing part. The separation enhancing part is configured to enhance separation of the gas from the wall surface continuous with the gas inlet. The separation enhancing part enhances separation of the gas from the wall surface to cause the gas introduced into the combustion chamber to generate the tumble flow. The gas inlet of the single center tumble port is positioned such that the extending area of the gas inlet overlaps the gas outlet. The extending area is defined as an area having a width equal to a width of the gas inlet and extending from the gas inlet in the gas intake direction when viewed in the reciprocation direction of the piston part. The exhaust valve is configured to open or close the gas outlet. The intake valve is configured to open or close the gas inlet.

The ignition plug includes the ignition part disposed in the combustion chamber. The ignition plug is configured to spark-ignite the gas in the combustion chamber. The throttle body includes the throttle valve. The throttle valve is configured to regulate the flow rate of the gas that is to be introduced into the combustion chamber.

The intake pipe connects, without a surge tank, the throttle body and the single center tumble port. The intake pipe allows the gas to pass therethrough so that the gas travels from the throttle body to the single center tumble port. The exhaust pipe is connected to the end of the exhaust port, the end being opposed to the gas outlet. The exhaust pipe allows the exhaust gas discharged via the exhaust port to pass therethrough.

The exhaust recirculation passage connects the exhaust pipe or the exhaust port and the intake pipe or the single center tumble port. The exhaust recirculation passage is configured to supply the recirculation gas, which is some of the exhaust gas taken out from the exhaust pipe or the exhaust port, to the intake pipe or the one single center tumble port so that the tumble flow is generated in the combustion chamber. When the one intake valve opens the gas inlet, the recirculation gas is introduced into the combustion chamber via the one single center tumble port together with the gas having flowed through the throttle body, the intake pipe, and the one single center tumble port. Consequently, the recirculation gas generates the tumble flow in the combustion chamber.

In the spark-ignition type engine unit according to (1), when the piston part moves toward the bottom dead point in the combustion chamber, the gas passes through the single center tumble port (SCTP). By the separation enhancing part, the gas is separated from the wall surface continuous with the gas inlet. The separation enhancing part is configured to separate the gas from the wall surface so that the tumble flow is generated in the cylinder part. Consequently, the gas introduced into the cylinder part through the single center tumble port (SCTP) generates the tumble flow in the cylinder part. The gas inlet that is provided in the one single center tumble port and that is configured to be opened or closed by the one intake valve can have an area greater than each of those in a configuration including a plurality of tumble ports and a plurality of gas inlets, for example. Accordingly, the gas introduced through the gas inlet can flow in the form of a large cluster. This can suppress or reduce turbulence in the tumble flow. Since the gas introduced through the gas inlet flows in the form of a large cluster, the turbulence in the gas flow in the vicinity of the center viewed in the reciprocation direction is smaller than that in a configuration in which gas is introduced through plural aligned gas inlets, for example. This can suppress or reduce the turbulence in the tumble flow.

The recirculation gas is introduced via the one single center tumble port together with the gas having flowed through the throttle body. This gas is fresh air flowing through the throttle body, the intake pipe, and the one single center tumble port not through the surge tank. In the combustion chamber, the tumble flow with less turbulence is generated. Thus, the combustion chamber is likely to maintain, in its inside, a gas distribution that reflects the distribution of the gas from the throttle body and the recirculation gas each having been supplied to the one single center tumble port. Therefore, it is possible to enhance the degree of freedom in designing the distribution of the exhaust gas in the combustion chamber. For example, the exhaust gas can be distributed unevenly in the combustion chamber. For another example, the exhaust gas can be dispersed uniformly in the combustion chamber.

As described above, with the spark-ignition type engine unit according to (1), it is possible to achieve a higher degree of freedom in designing the distribution of the exhaust gas in the combustion chamber of the spark-ignition type engine.

(2) The spark-ignition type engine unit according to (1) is configured such that
the ignition plug is further configured to spark-ignite the gas in the combustion chamber with the ignition part, which is positioned in a first area so as not to overlap a center passing line, the first area being one of two areas into which the combustion chamber is divided with the center passing line, the center passing line passing through a center of the gas outlet and a center of the gas inlet when viewed in the reciprocation direction.

With the configuration according to (2), the ignition part of the ignition plug is positioned so as not to overlap the center passing line. Therefore, it is possible to adopt the gas inlet formed such that a distance between the gas inlet and the gas outlet is shorter than a diameter of the ignition part. The ignition part is positioned so as to be away from the center passing line. This configuration also has a high degree of freedom in designing the distribution of the exhaust gas in the combustion chamber, and therefore is capable of making the distribution of the exhaust gas in the combustion chamber uneven according to the position of the ignition part. In addition, since this configuration employs the gas inlet formed such that the distance between the gas inlet and the gas outlet is shorter than the diameter of the ignition part, the gas inlet of the single center tumble port can achieve a large diameter. This further facilitates maintaining the gas distribution that reflects the distribution of the gas from the throttle body and the recirculation gas each having been supplied to the single center tumble port. Thus, it is possible to achieve a far higher degree of freedom in designing the distribution of the exhaust gas.

(3) The spark-ignition type engine unit described in (1) or (2) is configured such that
the exhaust pipe including a catalyst unit in which a catalyst for purifying exhaust gas discharged from the combustion chamber is stored, and
the exhaust recirculation passage is further configured to extract, as the recirculation gas, some of the exhaust gas at a location downstream of the catalyst unit in a flow of the exhaust gas.

With the configuration according to (3), the exhaust gas passes through the catalyst unit, in which the catalyst is stored. Therefore, pulsation of the exhaust gas caused by combustion in the spark-ignition type engine unit is suppressed or reduced. Such an exhaust gas is taken out to the exhaust recirculation passage as the recirculation gas. Consequently, the recirculation gas in which the pulsation is suppressed or reduced is supplied from the exhaust recirculation passage to the intake pipe. Since the effect of the fluctuation caused by the combustion can be suppressed or reduced, it is possible to suppress or reduce a difference between an expected distribution and a distribution of the recirculation gas in the combustion chamber. Therefore, it is possible to further enhance the degree of freedom in designing the distribution of the exhaust gas. In a case where catalyst units are disposed at plural locations in an exhaust pipe, an exhaust recirculation passage may be configured to extract recirculation gas at a location downstream of any of the catalyst units. For example, in a case where an upstream catalyst unit and a downstream catalyst unit are disposed in an exhaust pipe, an exhaust recirculation passage may be configured to extract recirculation passage at a location between the upstream catalyst unit and the downstream catalyst unit or may be configured to extract recirculation gas at a location downstream of the downstream catalyst unit.

(4) The spark-ignition type engine unit described in any one of (1) to (3) is configured such that
the combustion chamber has a diameter shorter than a stroke of the reciprocating movement of the piston part when viewed in the reciprocation direction.

With the configuration according to (4), when the piston part moves toward the bottom dead point, a tumble flow is generated by the gas introduced through the single center tumble port (SCTP). Since the stroke of the movement of the piston part is longer than the diameter of the combustion chamber, the piston part moves at a high speed. In addition, when the piston part moves toward the top dead point, the gas pushed by the piston part moves toward the top dead point in the combustion chamber. This strengthens or maintains the tumble flow. Since the stroke of the movement of the piston part is longer than the diameter of the combustion chamber, the piston part moves at a high speed. The gas is pushed back by the piston part, which moves at a high speed, and therefore a fast tumble flow tends to be maintained. By the fast tumble flow, it is possible to shorten the combustion period, thus enhancing the thermal efficiency. In addition, by making use of the tumble flow that tends to be maintained, it is possible to select and set the distribution of the exhaust gas in the combustion chamber. Thus, it is possible to achieve a high thermal efficiency and a high degree of freedom in designing the distribution of the exhaust gas.

(5) The spark-ignition type engine unit according to (4) is configured such that
the cylinder part has a stroke capacity of 0.1 L or more and less than 0.2 L.

The spark-ignition type engine unit according to (5) has a simple structure including the single center tumble port functioning as the one intake valve and the one exhaust valve. Thus, it is possible to maintain, in the combustion chamber, the gas distribution reflecting the distribution of the gas from the throttle body and the recirculation gas, while suppressing or reducing the upsizing of the small-capacity engine having a stroke capacity of 0.1 L or more and less than 0.2 L. Therefore, it is possible to achieve a higher degree of freedom in designing the distribution of the exhaust gas in the combustion chamber, while suppressing or reducing the upsizing.

(6) A vehicle including
the spark-ignition type engine unit according to any one of (1) to (5), and
a vehicle wheel configured to be driven by the spark-ignition type engine unit.

Since the vehicle according to (6) includes the spark-ignition type engine unit according to any one of (1) to (5), the vehicle has a high degree of freedom in designing a distribution of exhaust gas in the spark-ignition type engine unit.

The terminology used herein is for defining particular embodiments only and is not intended to be limiting the teaching. As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both of direct and indirect attachment and coupling unless otherwise specified. The terms "connected" and "coupled" are not limited to physical or mechanical connection or coupling, and can include direct and indirect electrical connection and coupling. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

Description will give an explanation about a novel spark-ignition type engine unit. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The single center tumble port (SCTP) is a passage through which gas is supplied to the combustion chamber, and functions as a tumble port. The function of the tumble port is to cause the intake air to generate a tumble flow (vertical revolving) in the combustion chamber. The single center tumble port (SCTP) has a wall surface shaped to cause the intake air to flow into the combustion chamber so as to generate a tumble flow in the combustion chamber. The single center tumble port (SCTP) has a structure for generating a tumble flow. For example, this structure separates a gas flow from a portion of the wall surface, which has a tubular shape, of the single center tumble port (SCTP) continuous with the gas inlet, the portion being farther from the gas outlet than any other portions of the wall surface. The structure for generating the tumble flow includes a projection provided on the portion of the wall surface, for example. The structure for generating the tumble flow is not limitative. Alternatively, for example, the structure may include a bulge portion provided at a location upstream of the portion of the wall surface in the gas flow direction. The bulge portion protrudes toward the outside of the port. In the cylinder part provided with the single center tumble port (SCTP), when the piston part moves for a long stroke, air is introduced into the cylinder bore through only one tumble port, which is relatively large. This makes it possible to generate a fast tumble flow.

The cylinder part is longer in stroke than in bore diameter. The cylinder is longer in stroke than in bore diameter. A ratio of the stroke to the bore diameter is 1.2 or more, for example.

The single center tumble port (SCTP) may be configured to satisfy at least one of the following requirements (i) to (iii), for example.
(i) The single center tumble port (SCTP) may include a gas inlet formed such that a distance between the gas inlet and a gas outlet on a center passing line is shorter than a diameter of an offset ignition part, the center passing line passing through a center of the gas inlet and a center of the gas outlet. Thanks to the configuration in which the offset ignition part is offset, the gas inlet can secure a large diameter.
(ii) The single center tumble port (SCTP) may include a gas inlet formed such that a center (i.e., a point through which a center line of a piston part passes) of a cylinder bore is located within the gas inlet when viewed in a reciprocation direction of the piston part.
(iii) The single center tumble port (SCTP) may include a gas inlet formed such that, when viewed in a reciprocation direction of a piston part, a portion of a center passing line within an area including the gas inlet includes a first portion where the center passing line and the gas inlet overlap each other and a second portion where the center passing line and the gas inlet do not overlap each other, the first portion being longer than the second portion. With this, the gas inlet can be designed to be larger for the diameter of the cylinder bore. In addition, the diameter of the gas inlet may be longer than the portion of the center passing line within the area including the gas inlet. With this, the gas inlet can be designed to be far larger for the diameter of the cylinder bore. The area including the gas inlet is one of two areas obtained by dividing the combustion chamber with a straight line being orthogonal to the center passing line and passing through the center of the cylinder bore when viewed in the reciprocation direction of the piston part. Specifically, the area including the gas inlet is one of the two areas that mainly includes the gas inlet. The center passing line refers to a straight line that is in parallel with the center passing line and that passes through the center of the cylinder bore when viewed in the reciprocation direction of the piston part. The center passing line may overlap the center passing line.

As described above, gas is supplied from the single center tumble port (SCTP), which has the large gas inlet, to the cylinder part. Consequently, a faster tumble flow can be generated in the combustion chamber. For example, the single center tumble port (SCTP) may be configured to satisfy any of the followings:
- All of the above-described requirements (i) to (iii);
- The above-described requirements (i) and (ii);
- The above-described requirements (ii) and (iii);
- The above-described requirements (i) and (iii);
- The above-described requirement (i);
- The above-described requirement (ii); or
- The above-described requirement (iii).

The ports of the single center tumble port (SCTP) and the exhaust port herein refer to gas passages formed in the cylinder part. Meanwhile, the gas inlet is an opening for taking air, and the gas outlet is an opening for discharging air. The gas inlet corresponds to a boundary between the single center tumble port (SCTP) and the combustion chamber. The gas outlet corresponds to a boundary between the exhaust port and the combustion chamber.

The combustion chamber is a space defined by the piston part and the cylinder part.

The tumble flow refers to a revolving around the axial line extending in the direction intersecting the reciprocation direction of the piston. The gas in the combustion chamber may generate not only the tumble flow but also other types of revolvings rather than the tumble flow. For example, the tumble flow and a swirl flow swirling around an axis extending along the reciprocation direction of the piston may exist in the gas in the combustion chamber.

The tumble flow flows from the gas inlet toward the gas outlet in an upper part (i.e., a part close to the cylinder head) of the combustion chamber. However, while the tumble flow exists in the gas in the combustion chamber, a reverse flow to the flow direction from the gas inlet to the gas outlet may also exist in the gas in the combustion chamber. In this case, such a reverse flow may exist in the upper part of the combustion chamber, for example.

The piston part and the combustion chamber each have a circular shape when viewed in the reciprocation direction. Alternatively, for example, at least one of the piston or the combustion chamber may have an ellipse shape when viewed in the reciprocation direction. There is no particular limitation on these shapes viewed in the reciprocation direction.

The separation enhancing part has a structure for separating, from the wall surface continuous with the gas inlet, gas that is to be sent to the gas inlet so as to generate a tumble flow in the gas having been introduced into the combustion chamber from the gas inlet. For example, the separation enhancing part is a protrusion protruding toward the interior space of the single center tumble port (SCTP). The protrusion may have an edge. In addition, the protrusion may be adjacent to a recessed portion that is provided to accentuate the protrusion. The separation enhancing part is not limited to a single protrusion. Alternatively, for example, the separation enhancing part may be a dimple, which means two or more very small concavities, formed in the wall surface.

The extending area is defined as an area having a width equal to a width of the gas inlet and extending from the gas inlet in the intake direction when viewed in the reciprocation direction of the piston. The "intake direction" corresponds to a direction of a straight line that is an extension of the center line of the single center tumble port (SCTP) from the gas inlet. The "width of the gas inlet" is a width of a portion of the gas inlet seen in a direction perpendicular to the intake direction, the width being greater than widths of any other portions of the gas inlet. When viewed in the reciprocation direction of the piston, the extending area overlaps the center of the top face of the piston, for example.

The "center passing line" is a straight line passing through the center of the gas inlet and the center of the gas outlet when viewed in the reciprocation direction of the piston.

The ignition part of the spark-ignition type engine is positioned so as not to overlap the center passing line. For example, the ignition part of the spark-ignition type engine is positioned in the first area, which is one of the two areas into which the combustion chamber is divided with the center passing line. That is, the ignition part is an offset ignition part. Alternatively, the ignition part of the spark-ignition type engine may be positioned so as to overlap the center passing line, for example. The spark-ignition type engine unit includes one ignition plug. However, this is not limitative. Alternatively, for example, the spark-ignition type engine unit may include two or more ignition plugs.

The exhaust recirculation passage is connected to the exhaust pipe and the intake pipe, for example. Alternatively, the exhaust recirculation passage may be connected to the exhaust port and the intake pipe. Further alternatively, the exhaust recirculation passage may be connected to the exhaust pipe and the single center tumble port. Still further alternatively, the exhaust recirculation passage may be connected to the exhaust port and the single center tumble port. The number of exhaust recirculation passages is not limited to one, and may be two or more.

The spark-ignition type engine unit is a four-stroke engine unit, for example. However, this is not limitative. Alternatively, the spark-ignition type engine unit may be a six-stroke engine unit or an eight-stroke engine unit, for example. There is no particular limitation on the number of cylinder parts in the engine. The spark-ignition type engine is a single-cylinder part engine, for example.

A location where the catalyst unit at least partially overlaps the cylinder part encompasses a location where the catalyst unit entirely overlaps the cylinder part.

The vehicle includes wheels, in addition to the engine, for example. The wheels include a driving wheel configured to rotate by drive power received from the engine. There is no particular limitation on the number of wheels. There is no particular limitation on the vehicle. Examples of the vehicle encompass a four-wheeled vehicle and a straddled vehicle. The four-wheeled vehicle includes a compartment, for example. The straddled vehicle refers to a vehicle including a saddle on which a driver can sit. Examples of the straddled vehicle encompass a two-wheeled motorcycle, a three-wheeled motorcycle, and an all-terrain vehicle (ATV).

### Advantageous Effects of Invention

According to an aspect of the present teaching, it is possible to provide a spark-ignition type engine having an enhanced degree of freedom in designing a distribution of exhaust gas in a combustion chamber.

### Brief Description of Drawings

[FIG. 1] (A) is a side view for showing a schematic configuration of a spark-ignition type engine unit according an embodiment of the present teaching. (B) is a perspective view showing, for explaining a spark-ignition type engine included in the spark-ignition type engine unit, an inner portion of the spark-ignition type engine viewed in a reciprocation direction of a piston part.
[FIG. 2] (A) is a perspective view showing, for explaining details of the spark-ignition type engine shown in FIG. 1, the inner portion of the spark-ignition type engine viewed in the reciprocation direction of the piston part. (B) is a side cross-sectional view showing a schematic configuration of the spark-ignition type engine.
[FIG.3] A front cross-sectional view of the spark-ignition type engine shown in FIG. 2.
[FIG. 4] A perspective view of the piston part of the spark-ignition type engine shown in FIG. 2.
[FIG. 5] An enlarged view of the inner portion of the spark-ignition type engine shown in FIG. 2(A).
[FIG. 6] An enlarged cross-sectional view of a single center tumble port (SCTP) and its surroundings of the spark-ignition type engine shown in FIG. 2.
[FIG. 7] (A) is a plan view illustrating an intake stroke and schematically explaining how gas flows in a combustion chamber of the spark-ignition type engine shown in FIG. 2. (B) is a perspective view illustrating the intake stroke.
[FIG. 8] A view for explaining a method of calculating a tumble ratio.
[FIG. 9] (A) is a plan view illustrating an intake stroke and schematically explaining how gas flows in a combustion chamber of a spark-ignition type engine according to a variation of the spark-ignition type engine unit of the embodiment. (B) is a perspective view illustrating the intake stroke.
[FIG. 10] A plan view for explaining how gas flows during a compression stroke in a spark-ignition type four-valve engine shown as a comparative example.
[FIG. 11] A graph showing a relation between a diameter of the combustion chamber and thermal efficiency of the spark-ignition type engine.
[FIG. 12] A graph showing a relation between a stroke capacity and thermal efficiency of the spark-ignition type engine.
[FIG. 13] A graph showing a relation between a stroke capacity and indicated thermal efficiency of a general engine.
[FIG. 14] A view for explaining how gas flows in the spark-ignition type engine shown in FIGs. 1 to 9.
[FIG. 15] (A) is a view showing a variation of a port of the spark-ignition type engine. (B) is a view showing another variation of the port of the spark-ignition type engine.
[FIG. 16] A view for explaining how gas flows in the comparative example.
[FIG. 17] A graph showing tumble ratios in the configurations shown in FIGs. 14, 15, and 16.
[FIG. 18] A side view showing a straddled vehicle on which the spark-ignition type engine unit shown in FIG. 1 is mounted.
[FIG. 19] Aside view showing another type of straddled vehicle different from the straddled vehicle shown in FIG. 18.
[FIG. 20] A view schematically showing a location of an engine unit in the vehicle shown in FIG. 19.
[FIG. 21] A view schematically showing a location of another type of engine unit, which is different from that shown in FIG. 20.

### Description of Embodiments

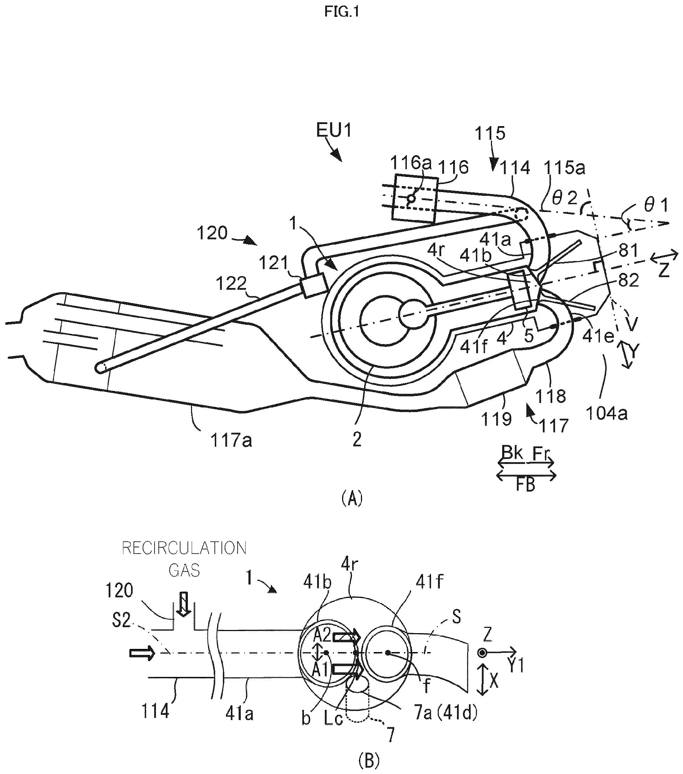

FIG. 1(A) is a side view illustrating a schematic configuration of a spark-ignition type engine unit according to an embodiment of the present teaching. FIG. 1(B) is a perspective view showing, for explaining a spark-ignition type engine included in the spark-ignition type engine unit, an inner portion of the spark-ignition type engine viewed in a reciprocation direction of a piston part.

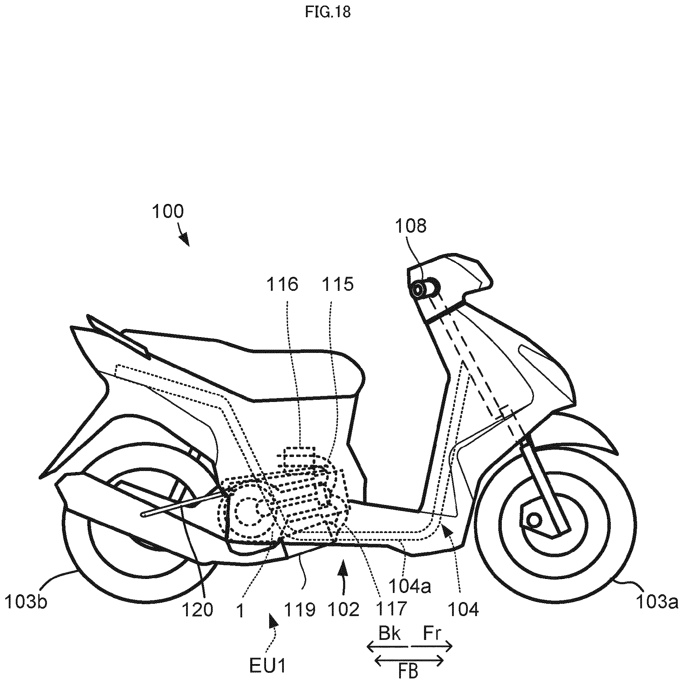

The spark-ignition type engine unit EU1 shown in FIG. 1 is mounted on a straddled vehicle 100 (see FIG. 18), for example. A direction toward which the straddled vehicle 100, on which the spark-ignition type engine unit EU1 is mounted, travels is defined as front Fr, and a direction reverse to the front Fr is defined as back Bk. A direction including the front Fr and the back Bk is referred to as a front-back direction FB.

The spark-ignition type engine unit EU1 includes a spark-ignition type engine 1, an intake pipe 114, a throttle body 116, an exhaust pipe 118, a catalyst unit 119, and an exhaust recirculation passage 120.

The spark-ignition type engine 1 is a single-cylinder part engine. The spark-ignition type engine 1 (hereinafter, also referred to as an engine 1) includes a cylinder part 4, a piston part 5, a crankshaft 2, only one exhaust port 41e, only one single center tumble port (SCTP) 41a, only one intake valve 81, only one exhaust valve 82, and an offset ignition plug 7. That is, the spark-ignition type engine unit EU1 includes the piston part 5, the crankshaft 2, the one exhaust port 41e, the one single center tumble port (SCTP) 41a, the one intake valve 81, the one exhaust valve 82, and the offset ignition plug 7. The spark-ignition type engine 1 includes the one cylinder part 4.

The cylinder part 4 has a combustion chamber 4r formed therein. The spark-ignition type engine 1 is a water-cooled engine. A cylinder body part 42 has a coolant passage 42j.

The piston part 5 is provided in the cylinder part 4, and is movable in a reciprocating manner. The piston part 5 defines a combustion chamber 4r together with the cylinder part 4. A direction in which the piston part 5 moves in a reciprocating manner is referred to as a reciprocation direction Z.

The crankshaft 2 is connected to the piston part 5, and is rotatable in conjunction with reciprocating movement of the piston part 5.

In FIG. 1(B), a direction in which the crankshaft 2 extends is referred to as a crankshaft direction X. FIG. 1(B) also shows a direction Y, which is intersecting both the crankshaft direction X and the reciprocation direction Z.

The single center tumble port (SCTP) 41a and the exhaust port 41e are provided to the cylinder part 4. The exhaust port 41e communicates with the combustion chamber 4r via a gas outlet 41f. Exhaust gas from the combustion chamber 4r passes through the exhaust port 41e.

The cylinder part 4 has a stroke capacity of 0.1 L or more and less than 0.2 L, for example. The spark-ignition type engine 1 is a naturally aspirated engine. The spark-ignition type engine 1 takes air without a turbocharger.

The single center tumble port (SCTP) 41a communicates with the combustion chamber 4r via a gas inlet 41b. The single center tumble port (SCTP) 41a has a structure for causing gas introduced into the combustion chamber 4r through the gas inlet 41a to generate a tumble flow. The gas introduced into the combustion chamber 4r is also referred to as intake gas. The tumble flow refers to a revolving around an axial line in the combustion chamber 4r, the axial line extending in a direction intersecting the reciprocation direction Z. The structure for generating the tumble flow will be described in detail later.

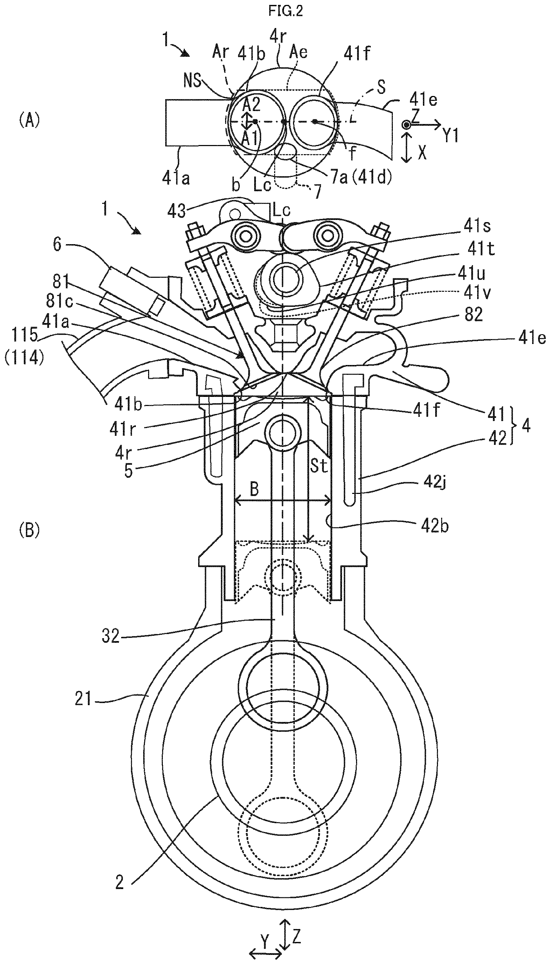

As shown in FIG. 2(A), an area having a width equal to a width of the gas inlet 41b and extending from the gas inlet 41b in an intake direction Y1 when viewed in the reciprocation direction Z is defined as an extending area Ae. The single center tumble port (SCTP) 41a and the gas inlet 41b are provided such that the extending area Ae overlaps the gas outlet 41f. In the present embodiment, the intake direction Y1 is included in the direction Y.

The intake valve 81 is configured to open or close the gas inlet 41b. The exhaust valve 82 is configured to open or close the gas outlet 41f.

The offset ignition plug 7 is provided to a cylinder head part 41. The offset ignition plug 7 has an offset ignition part 7a. The offset ignition plug 7 is inserted into a plug hole 41d formed in the cylinder part 4. The offset ignition part 7a is exposed to the combustion chamber 4r. The offset ignition part 7a is configured to spark-ignite the gas in the combustion chamber 4r.

The intake pipe 114 is connected to the spark-ignition type engine 1. More specifically, the intake pipe 114 communicates with the single center tumble port (SCTP) 41a of the spark-ignition type engine 1. The intake pipe 114 connects the single center tumble port (SCTP) 41a and the throttle body 116. The spark-ignition type engine unit EU1 is not provided with a surge tank. The intake pipe 114 connects the throttle body 116 and the single center tumble port (SCTP) 41a without a surge tank. The intake pipe 114 allows the gas to pass therethrough so that the gas travels from the throttle body 116 to the single center tumble port (SCTP) 41a.

The throttle body 116 regulates a flow rate of fresh air that is to be supplied to the spark-ignition type engine 1. By the intake pipe 114 and a portion of the throttle body 116 through which portion the gas flows, an intake passage 115 is constituted. The intake passage 115 supplies, to the single center tumble port (SCTP) 41a, fresh air taken through an air filter (not shown).

The throttle body 116 includes a throttle valve 116a. The throttle valve 116a regulates a flow rate of gas that is to be supplied to the intake passage 115. More specifically, the throttle valve 116a regulates an amount of fresh air that is to flow through the intake passage 115 based on a manipulation amount of an acceleration instruction unit 108 (see FIG. 18). The throttle body 116 regulates an amount of fresh air that is to be supplied to the spark-ignition type engine 1 based on a manipulation amount of the acceleration instruction unit 108 in the vehicle.

The exhaust pipe 118 is connected to an end of the exhaust port 41e, the end being opposite to the gas outlet 41f. The exhaust pipe 118 allows exhaust gas discharged from the spark-ignition type engine 1 via the exhaust port 41e to pass therethrough. The exhaust pipe 118 includes a silencer 117a. The silencer 117a is disposed downstream of the catalyst unit 119 in the flow of the exhaust gas.

The catalyst unit 119 is disposed in the middle of the exhaust pipe 118. The catalyst unit 119 stores therein a catalyst for purifying the gas passing through the exhaust pipe 118. In addition to or in place of the catalyst unit 119, a catalyst (or a catalyst unit) may be disposed inside the silencer 117a.

The exhaust recirculation passage 120 is a passage for causing some of the exhaust gas generated in the spark-ignition type engine 1 to be introduced into the spark-ignition type engine 1 again as recirculation gas. For example, while the spark-ignition type engine 1 is running under partial load, the negative pressure in the intake pipe 114 is reduced, thanks to the recirculation gas supplied from the exhaust recirculation passage 120. This can suppress or reduce a pumping loss that might be caused by the throttle valve 116a.

The recirculation gas has a lower oxygen concentration and a higher carbon dioxide concentration than those of the fresh air passing through the throttle body 116. In the present embodiment, the distribution of the recirculation gas in the combustion chamber 4r is designed to suit a desired combustion state.

The exhaust recirculation passage 120 of the present embodiment is connected to the exhaust pipe 118 and the intake pipe 114. The exhaust recirculation passage 120 includes an exhaust recirculation valve 121 and an exhaust recirculation pipe 122. The exhaust recirculation valve 121 is disposed in the middle of the exhaust recirculation pipe 122. The exhaust recirculation valve 121 regulates an amount of recirculation gas that is to be supplied to the combustion chamber 4r.

The exhaust recirculation passage 120 takes out some of the exhaust gas from the exhaust pipe 118 as the recirculation gas. When the intake valve 81 opens the gas inlet, the recirculation gas is introduced into the combustion chamber 4r via the single center tumble port (SCTP) 41a together with the gas having flowed through the throttle body 116.

The exhaust recirculation passage 120 supplies the recirculation gas to the intake pipe 114. The exhaust recirculation passage 120 supplies the recirculation gas to the intake pipe 114 such that the recirculation gas and the gas having flowed through the throttle body 116 generate a tumble flow in the combustion chamber 4r.

The exhaust recirculation passage 120 of the present embodiment takes out the recirculation gas at a location downstream of the catalyst unit 119 in the flow of the exhaust gas. Specifically, the exhaust recirculation pipe 122 in the exhaust recirculation passage 120 is connected to the silencer 117a. The exhaust recirculation passage 120 takes out the recirculation gas from the silencer 117a. The exhaust gas residing at a location downstream of the catalyst unit 119 has already passed through the catalyst unit 119. Thus, in the exhaust gas, pulsation in pressure and flow rate caused by combustion of the spark-ignition type engine 1 is suppressed or reduced. The exhaust recirculation passage 120 takes out, as the recirculation gas, the exhaust gas in which the pulsation caused by the combustion is suppressed or reduced. The exhaust recirculation passage 120 supplies, to the intake pipe 114, the recirculation gas in which the pulsation caused by the combustion is suppressed or reduced.

As shown in FIG. 1(B), the combustion chamber 4r is divided into two areas, i.e., a first area A1 and a second area A2, when viewed in the reciprocation direction Z. The first area A1 and the second area A2 are partitioned from each other by a center passing line S, which passes through a center f of the gas outlet 41f and a center b of the gas inlet 41b. The offset ignition part 7a is positioned in the first area A1 such that the offset ignition part 7a does not overlap the center passing line S.

FIG. 1(B) shows a center line S2 of the intake pipe 114 and the single center tumble port (SCTP) 41a. The center line S2 extends from the center passing line S along the intake pipe 114 and the single center tumble port (SCTP) 41a when viewed in the reciprocation direction Z. Internal spaces of the intake pipe 114 and the single center tumble port (SCTP) 41a are also each divided into two areas by the center line S2 when viewed in the reciprocation direction Z. These two areas are respectively continuous with the first area A1 and the second area A2 in the combustion chamber 4r when viewed in the reciprocation direction Z. Of the two areas of the intake pipe 114 and the single center tumble port (SCTP) 41a, the area continuous with the first area A1 of the combustion chamber 4r is referred to as a first area A1. Meanwhile, of the two areas of the intake pipe 114 and the single center tumble port (SCTP) 41a, the area continuous with the second area A2 of the combustion chamber 4r is referred to as a second area A2. The center line S2 of the intake pipe 114 and the single center tumble port (SCTP) 41a is not necessarily a straight line as those shown in FIG. 1(B) when viewed in the reciprocation direction Z. In a case where the intake pipe 114 and the single center tumble port (SCTP) 41a are curved, the center line S2 is also curved. In this case, based on the curved center line S2, the first area A1 and the second area A2 are defined.

The exhaust recirculation passage 120 of the present embodiment is connected to the intake pipe 114 such that the exhaust recirculation passage 120 is opened to the second area A2 in the intake pipe 114. In the intake pipe 114 and the single center tumble port (SCTP) 41a, most of the recirculation gas having been supplied from the exhaust recirculation passage 120 is distributed in the second area A2. The gas having been passed through the single center tumble port (SCTP) 41a generates a tumble flow in the combustion chamber 4r. In the combustion chamber 4r of the present embodiment, a tumble flow with less turbulence is generated. Thus, the combustion chamber 4r tends to maintain, in its inside, a gas distribution that reflects the distribution of the gas from the throttle body 116 and the recirculation gas each having been supplied to the one single center tumble port (SCTP) 41a. That is, most of the recirculation gas having been supplied from the exhaust recirculation passage 120 is distributed in the second area A2 in the combustion chamber 4r, and such a distribution tends to be maintained.

The formation of the tumble flow with less turbulence and the distribution of the recirculation gas will be described in detail later.

FIG. 2 is a view for explaining details of the spark-ignition type engine 1 shown in FIG. 1. FIG. 2(A) is a perspective view of the inner portion of the spark-ignition type engine 1 viewed in the reciprocation direction of the piston part, whereas FIG. 2(B) is a side cross-sectional view of the spark-ignition type engine 1.

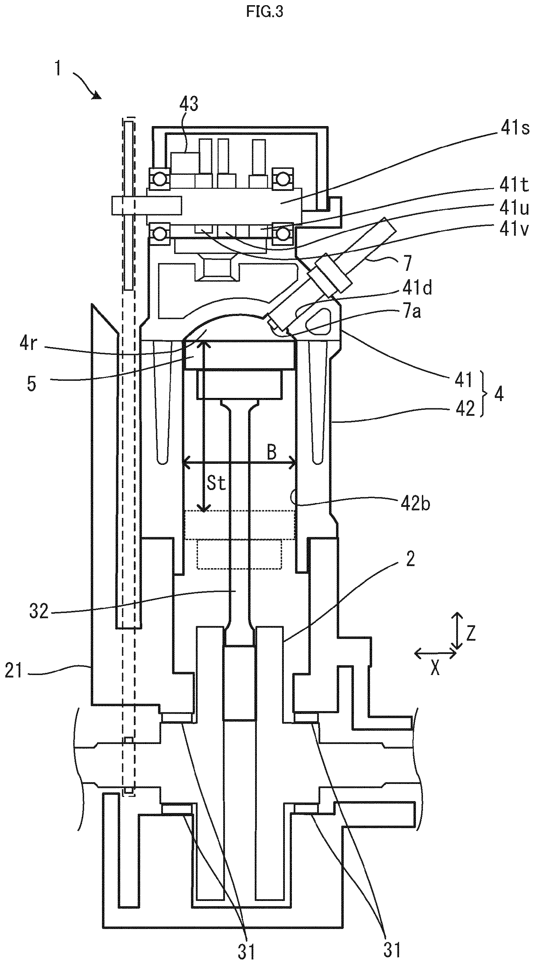

FIG. 3 is a front cross-sectional view of the spark-ignition type engine shown in FIG. 2.

The spark-ignition type engine 1 shown in FIGs. 2 and 3 is mounted on the straddled vehicle 100 shown in FIG. 18, for example.

The spark-ignition type engine 1 includes the crankshaft 2, a crankcase part 21, the cylinder part 4, the piston part 5, a fuel ignition part 6, the offset ignition part 7a (offset ignition plug 7), the intake valve 81, and the exhaust valve 82. The spark-ignition type engine 1 is a single-cylinder part engine.

The cylinder part 4 includes the cylinder head part 41 and the cylinder body part 42. The crankcase part 21, the cylinder body part 42, and the cylinder head part 41 are stacked in this order, and are fastened to each other.

The cylinder body part 42 has, in its inside, a cylinder bore 42b. The cylinder bore 42b is a space inside the cylinder body part 42.

The cylinder head part 41 defines a ceiling part 41r of the combustion chamber 4r.

The piston part 5 is accommodated in the cylinder bore 42b. The piston part 5 is provided movably in a reciprocating manner. The direction in which the piston part 5 moves in a reciprocating manner is referred to as the reciprocation direction Z. The piston part 5 moves in a reciprocating manner between a top dead point, which is indicated by the solid lines in FIG. 2, and a bottom dead point, which is indicated by the broken lines in FIG. 2. The piston part 5 defines the combustion chamber 4r together with the cylinder part 4. The piston part 5, the cylinder part 4, the intake valve 81, and the exhaust valve 82 define the combustion chamber 4r.

The combustion chamber 4r has a diameter B shorter than a stroke St of the reciprocating movement of the piston part 5 when viewed in the reciprocation direction Z. That is, the stroke St of the reciprocating movement of the piston part 5 is longer than the diameter B of the combustion chamber 4r. A ratio of the stroke St to the diameter B is 1.2 or more, for example. Alternatively, the ratio of the stroke St to the diameter B may be 1.3 or more, for example. Further alternatively, the ratio of the stroke St to the diameter B is 1.5 or more, for example.

A compression ratio of the spark-ignition type engine 1 is set higher than that of a conventional engine. The spark-ignition type engine 1 can achieve a higher compression ratio than that of a conventional engine, while suppressing or reducing occurrence of knocking. This can also improve the thermal efficiency of the spark-ignition type engine 1.

A maximum output revolution speed of the spark-ignition type engine 1 is set at less than 6000 rpm. The maximum output revolution speed is a revolution speed at which a maximum output can be attained. Despite its large stroke St, the spark-ignition type engine 1 has a maximum output revolution speed of less than 6000 rpm, thus making it possible to suppress or reduce the maximum moving speed of the piston part 5.

In the spark-ignition type engine 1, the diameter B of the combustion chamber 4r is set within a range from 40 mm to 60 mm, and the stroke St of the combustion chamber 4r is set within a range from 70 mm to 80 mm, for example.

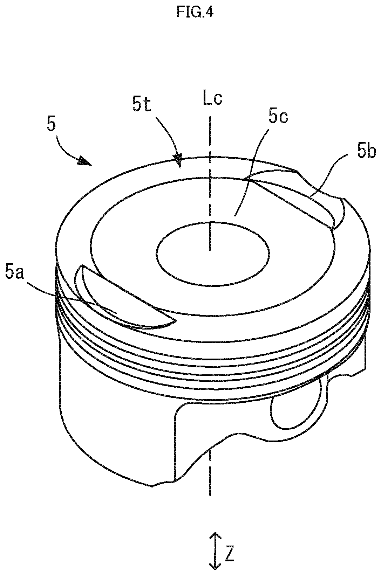

FIG. 4 is a perspective view of the piston part of the spark-ignition type engine shown in FIG. 2.

The piston part 5 has a top face 5t having a recessed portion 5c, which is depressed deeper than its surroundings. The recessed portion 5c has a circular shape when viewed in the reciprocation direction Z. The recessed portion 5c has a circular shape centered on a center line Lc of the piston part 5 when viewed in the reciprocation direction Z.

In the present embodiment, the center of the piston part 5 and the center of the combustion chamber 4r overlap each other when viewed in the reciprocation direction Z. In addition, the center of the piston part 5 and the center of the combustion chamber 4r overlap the center line Lc when viewed in the reciprocation direction Z. Thus, for reference, the common reference sign "Lc" is given to the center of the piston part 5, the center of the combustion chamber 4r, and the center line viewed in the reciprocation direction Z.

In addition, the top face 5t of the piston part 5 has valve recessed portions 5a and 5b for avoiding interference with the intake valve 81 and the exhaust valve 82. The valve recessed portions 5a and 5b are adjacent to the recessed portion 5c. The valve recessed portions 5a and 5b respectively receive parts of the intake valve 81 and the exhaust valve 82. The recessed portion 5c is independent of the valve recessed portions 5a and 5b, and does not receive the intake valve 81 or the exhaust valve 82.

The crankshaft 2 shown in FIGs. 2 and 3 is supported by the crankcase part 21 via bearings 31 (see FIG. 3). The crankshaft 2 is connected to the piston part 5 via a connecting rod 32. The connecting rod 32 has a first end rotatably supported by the crankshaft 2 and a second end rotatably supported by the piston part 5. With this configuration, the crankshaft 2 rotates in conjunction with reciprocating movement of the piston part 5.

The spark-ignition type engine 1 includes the one single center tumble port (SCTP) 41a and the one exhaust port 41e. The single center tumble port (SCTP) 41a functions as an intake port. The single center tumble port (SCTP) 41a and the exhaust port 41e are provided in the cylinder head part 41. The single center tumble port (SCTP) 41a and the exhaust port 41e each communicate with the combustion chamber 4r. The cylinder head part 41 has the gas inlet 41b and the gas outlet 41f. The gas inlet 41b is an opening of the single center tumble port (SCTP) 41a, the opening being provided in the combustion chamber 4r. The gas outlet 41f is an opening of the exhaust port 41e, the opening being provided in the combustion chamber 4r. The gas passing through the single center tumble port (SCTP) 41a is supplied to the combustion chamber 4r through the gas inlet 41b. The gas inlet 41b of the spark-ignition type engine 1 is larger than the gas outlet 41f. The gas inlet 41b is formed such that a center (i.e., a point through which the center line Lc of the piston part 5 passes) of the cylinder bore 42b is located within the gas inlet 41b when viewed in the reciprocation direction Z of the piston part.

The single center tumble port (SCTP) 41a has an end (upstream end) opposite to the gas inlet 41b, the end being opened to an outer surface of the cylinder head part 41. To the end (upstream end) of the gas inlet 41b, the intake passage 115 (see FIG. 1) is connected. Specifically, to the upstream end of the gas inlet 41b, the intake pipe 114, which constitutes the intake passage 115, is connected.

The exhaust port 41e is formed in the cylinder head part 41 so as to extend downstream from the gas outlet 41f of the combustion chamber 4r while being curved. An end (downstream end) of the exhaust port 41e opposite to the gas outlet 41f is opened to an outer surface of the cylinder head part 41. To the end (downstream end) of the gas outlet 41f, the exhaust pipe 118 (see FIG. 1) is connected.

As shown in FIG. 2(A), an area extending from the gas inlet 41b in a direction reverse to the intake direction Y1 when the cylinder part 4 is viewed in the reciprocation direction Z is defined as a gas inlet vicinity area Ar, in contrast to the extending area Ae. The ceiling part 41r of the combustion chamber 4r has a periphery part continuous with the cylinder body part 42. At least the periphery part includes a non-squish area NS, which resides in the gas inlet vicinity area Ar. The non-squish area NS is a portion of the periphery part of the ceiling part 41r, the portion being not provided with a projection projected toward the combustion chamber 4r. That is, the non-squish area NS is an area not provided with the projection, which is designed to provide a squish effect.

In the non-squish area NS, a distance by which the cylinder head part 41 and the piston part 5 are separated from each other in the direction of the center line Lc of the piston part 5 continuously increases with increasing proximity to the radial center of the combustion chamber 4r.

In the present embodiment, the non-squish area NS is provided in the entire periphery part of the ceiling part 41r.

The fuel ignition part 6 is attached to face the single center tumble port (SCTP) 41a. The fuel ignition part 6 injects a fuel toward the single center tumble port (SCTP) 41a. The fuel ignition part 6 injects the fuel at a location upstream of the gas inlet 41b. The fuel ignition part 6 injects the fuel toward the gas having been supplied into the single center tumble port (SCTP) 41a. The gas containing the fuel is supplied to the combustion chamber 4r through the gas inlet 41b. Specifically, the gas that is to be supplied to the combustion chamber 4r contains the fresh air, the recirculation gas, and the fuel.

In the spark-ignition type engine 1, combustion takes place at a theoretical air-fuel ratio (stoichiometry). The fuel ignition part 6 injects the fuel so that combustion takes place at a theoretical air-fuel ratio in the spark-ignition type engine 1. The fuel ignition part 6 injects the fuel at an air-fuel ratio falling within a range from 14.2 to 14.8. This corresponds to an excess air ratio ranging from 0.98 to 1.02. More specifically, for example, the spark-ignition type engine 1 detects an oxygen content in exhaust gas by an oxygen sensor (not shown). Then, based on the oxygen content thus detected, the spark-ignition type engine 1 injects the fuel at an air-fuel ratio falling within a range from 14.2 to 14.8.

As shown in FIG. 2(A), the combustion chamber 4r is divided into the two areas, i.e., the first area A1 and the second area A2, when viewed in the reciprocation direction Z. The offset ignition part 7a is disposed in the first area A1 such that the offset ignition part 7a does not overlap the center passing line S.

The gas inlet 41b is formed such that a distance between the gas inlet 41b and the gas outlet 41f on the center passing line S is shorter than a diameter of the offset ignition part 7a. The offset ignition part 7a is disposed so as not to overlap the center passing line S, whereby the gas inlet 41b can secure a large diameter.

To the cylinder head part 41, a camshaft 41s is rotatably provided. The camshaft 41s is provided with cams 41t, 41u, and 41v. The camshaft 41s and the cams 41t, 41u, and 41v are integrated with each other, and rotate in conjunction with rotation of the crankshaft 2. When the cam 41t operates, the exhaust valve 82 moves linearly and reciprocatingly. Consequently, the gas outlet 41f opens and closes. When the cams 41u and 41v operate, the intake valve 81 moves linearly and reciprocatingly. Consequently, the gas inlet 41b opens and closes.

When the piston part 5 moves to the bottom dead point (the position indicated by the broken lines in FIG. 2), the intake valve 81 opens the gas inlet 41b. This causes the gas (intake gas) introduced into the combustion chamber 4r through the single center tumble port (SCTP) 41a to generate a tumble flow.

The intake valve 81 closes the gas inlet 41b at a timing later than a timing when the piston part 5 reaches the bottom dead point. Thus, the spark-ignition type engine 1 has a compression ratio smaller than an expansion ratio. The spark-ignition type engine 1 includes a variable valve timing mechanism 43. The variable valve timing mechanism 43 changes the timing to close the intake valve 81 under control of a control unit (not shown). Specifically, the variable valve timing mechanism 43 changes the timing to close the intake valve 81 by switching the cam to drive the intake valve 81 from the cam 41u to the cam 41v, or vice versa.

When the piston part 5 moves toward the bottom dead point in the stroke longer than the diameter B of the combustion chamber 4r when viewed in the reciprocation direction Z, the cylinder part 4 causes the gas introduced through the single center tumble port (SCTP) 41 to generate a tumble flow. Specifically, the cylinder part 4 has the cylinder bore 42b, which has a cylindrical shape and in which the piston part 5 is accommodated. The cylinder part 4 and the piston part 5 define the combustion chamber 4r. In the cylinder part 4, the piston part 5 moves in the stroke St, which is longer than the diameter B of the combustion chamber 4r. Most of the gas introduced through the single center tumble port (SCTP) 41a flows toward the exhaust valve 82, and is then guided to the wall surface of the cylinder bore 42b, which has a cylindrical shape. With this, the tumble flow is generated. When the piston part 5 moves toward the top dead point, the piston part 5 pushes the gas toward the top dead point. The cylinder part 4 is configured to cause the gas pushed by the piston part 5 toward the top dead point to move toward the gas inlet 41b, in which the intake valve 81 is disposed. The gas pushed by the piston part 5 is guided to the wall surface of the cylinder bore 42b, which has a cylindrical shape. Then, the gas is raised toward the gas inlet 41b, in which the intake valve 81 is disposed. Also with this, the tumble flow is generated. The tumble flow will be described in detail later.

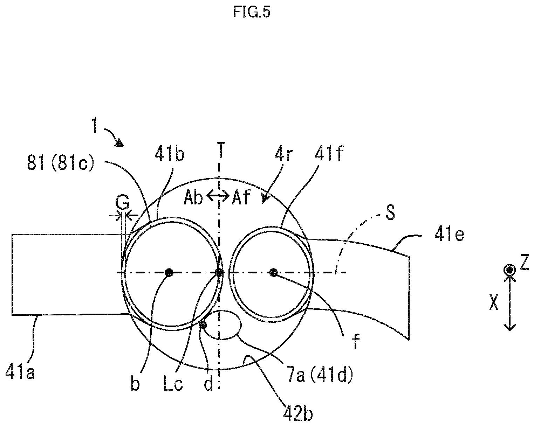

FIG. 5 is an enlarged view of the spark-ignition type engine shown in FIG. 2(A).

FIG. 5 shows another way of dividing the combustion chamber 4r according to another viewpoint different from that in FIG. 2(A). That is, as shown in FIG. 5, the combustion chamber 4r is divided by a straight line T into an area Ab including the gas inlet 41b and an area Af including the gas outlet 41f, the straight line T being orthogonal to the center passing line S and passing through the center Lc of the cylinder bore 42b when viewed in the reciprocation direction Z of the piston part 5 (see FIG. 2). FIG. 5 shows the center passing line passing through the center Lc of the cylinder bore when viewed in the reciprocation direction Z of the piston part 5.

In the present embodiment, the gas inlet 41b of the single center tumble port (SCTP) 41a can be made large for the cylinder bore 42b, which has a small diameter. Specifically, the gas inlet 41b is formed in the following manner. When viewed in the reciprocation direction Z, a portion of the center passing line S within the area Ab including the gas inlet 41b has a first portion where the center passing line S and the gas inlet 41b overlap each other and a second portion where the center passing line S and the gas inlet 41b do not overlap each other, the first portion being longer than the second portion.

Thus, when the gas is supplied into the cylinder part 4 through the single center tumble port (SCTP) 41a, which has the large intake vent 41b, a fast tumble flow is generated in the combustion chamber 4r.

In the example shown in FIG. 5, the length of the second portion where the center passing line S and the gas inlet 41b do not overlap each other is substantially zero, for example. That is, the gas inlet 41b is disposed so as to be in internal contact with the combustion chamber 4r when viewed in the reciprocation direction Z. The center Lc of the cylinder bore 42b is within the gas inlet 41b when viewed in the reciprocation direction Z.

In addition, in the present embodiment, the intake valve 81 is disposed in the following manner. That is, in a state where a valve surface portion 81c of the intake valve 81 closes the intake valve 41b, an end point (i.e., a point overlapping Lc in FIG. 5) of the valve surface portion 81c is closer to the gas outlet 41f than is an end point d of the plug hole 41d, the end point of the valve surface portion 81c being close to the gas outlet 41f, the end point d of the plug hole 41d being close to the gas inlet in a direction in parallel with the center passing line S when viewed in the reciprocation direction Z. With this, the large intake vent 41b is formed.

For example, the combustion chamber 4r has a diameter that is longer than 40 mm and shorter than 60 mm. In this case, the portion of the center passing line S within the area Ab including the gas inlet 41b has a length that is longer than 20 mm and shorter than 30 mm. In this portion, the first portion where the center passing line S and the gas inlet 41b overlap each other has a length that is longer than 20 mm and shorter than 30 mm. In the example shown in FIG. 5, in the portion of the center passing line S within the area Ab including the gas inlet 41b, the first portion where the center passing line S and the gas inlet 41b overlap each other has a length that is longer than 20 mm and smaller than 30 mm. However, the diameter of the combustion chamber 4r, the length of the portion of the center passing line S within the area Ab including the gas inlet 41b, the length of the first portion where the center passing line S and the gas inlet 41b overlap each other, and the length of the second portion where the center passing line S and the gas inlet 41b do not overlap each other are not limited to the above-described ranges.

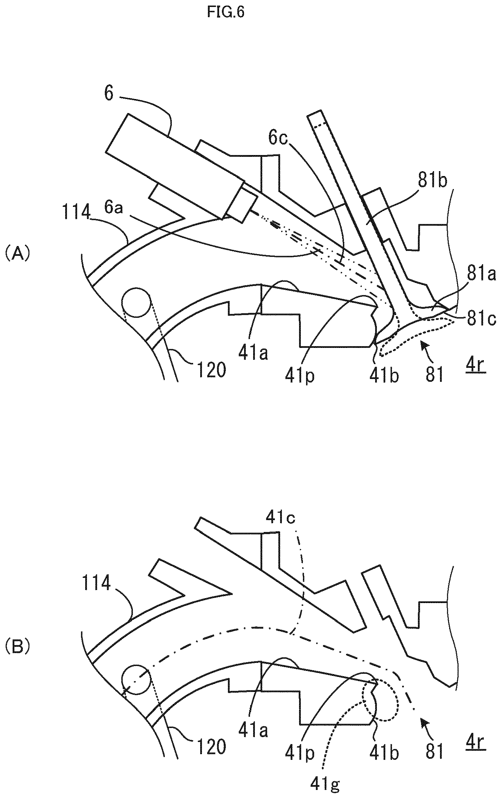

FIG. 6 is an enlarged cross-sectional view of the single center tumble port (SCTP) and its surroundings of the spark-ignition type engine shown in FIG. 2. FIG. 5(A) is a view showing the position of the single center tumble port (SCTP) 41a as well as the positions of the intake valve 81 and the fuel ignition part 6. FIG. 5(B) is a cross-sectional view for clearly showing only the single center tumble port (SCTP) 41a.

As described above, the spark-ignition type engine 1 is provided with the one single center tumble port (SCTP) 41a. The single center tumble port (SCTP) 41a has an inner wall extending in a tubular shape.

The intake valve 81 has an umbrella part 81a and a stem 81b. The umbrella part 81a has a disk-like shape. The stem 81b has a columnar shape, and is continuous with the umbrella part 81a. The intake valve 81 has the valve surface portion 81c. The valve surface portion 81c is a portion of the umbrella part 81a, the portion facing the combustion chamber 4r. The valve surface portion 81c has a circular shape. When the intake valve 81 closes the intake valve 41b, the gas inlet 41b is closed with the valve surface portion 81c. When the intake valve 81 closes the intake valve 41b, a gap between the valve surface portion 81c and the gas inlet 41b disappears, and consequently the combustion chamber 4r is completely defined by the valve surface portion 81c, the cylinder part 4, and the piston part 5.

The single center tumble port (SCTP) 41a has a structure for causing the gas introduced into the combustion chamber 4r from the gas inlet 41b to generate a tumble flow. Specifically, the single center tumble port (SCTP) 41a has a separation enhancing part 41p provided on its inner wall. The separation enhancing part 41p has a structure for separating, from the wall surface continuous with the gas inlet 41b, the gas that is to be sent to the gas inlet 41b so as to cause the gas introduced into the combustion chamber 4r from the gas inlet 41b to generate a tumble flow. More specifically, the separation enhancing part 41p has a structure for separating the gas at least from a portion 41g of the circumference defining the gas inlet 41b of the single center tumble port (SCTP) 41a, the portion 41g being farther from the gas outlet 41f (see FIG. 1) than any other portions of the circumference. More specifically, when seen in a cross-section passing through the gas inlet 41b and the gas outlet 41f, the separation enhancing part 41p is a fold-back shape portion located at least at the portion 41g of an annular portion of the wall surface constituting the single center tumble port (SCTP) 41a, the annular portion being adjacent to the gas inlet 41b, the portion 41g being farther from the gas outlet 41f than any other portions of the annular portion. The separation enhancing part 41p has a shape sharply folded back toward a direction away from the center line 41c of the single center tumble port (SCTP) 41a. In other words, the separation enhancing part 41p has a shape sharply folded back toward a direction away from the gas outlet 41f.

The separation enhancing part 41p protrudes toward the interior space of the single center tumble port (SCTP) 41a. The separation enhancing part 41p is a projection extending along an annular circumference of the inner wall, the annular circumference being located upstream of the gas inlet 41b in the gas flow direction. That is, the separation enhancing part 41p extends along the circumference of the gas inlet 41b. However, the separation enhancing part 41p does not make a circuit on the inner wall. The single center tumble port (SCTP) 41a has the separation enhancing part 41p at a portion of an annular band-shaped portion continuous with the gas inlet 41b, the portion being farther from the gas outlet 41f than any other portions of the annular band-shaped portion. The separation enhancing part 41p has an edge. Thus, the inner wall of the single center tumble port (SCTP) 41a shown in FIG. 6 is not continuous at the separation enhancing part 41p in a direction in which the single center tumble port (SCTP) 41a extends. The separation enhancing part 41p has a right angle or an acute angle in a cross-section shown in FIG. 5.

The separation enhancing part 41p has an acute angle in a cross-section shown in FIG. 6.

Although the separation enhancing part 41p has the fold-back shape, the separation enhancing part 41p does not necessarily has the edge as those shown in FIG. 5 in a micro view.

The gas flows toward the gas inlet 41b through the single center tumble port (SCTP) 41a, while being in contact with the wall surface. Then, the gas is separated from the wall surface at the separation enhancing part 41p. The gas cannot flow along the shape that is sharply folded back. That is, the flow directed away from the gas outlet 41f decreases. Thus, among the gas flows introduced into the combustion chamber 4r through a gap between the gas inlet 41b and the intake valve 81, a gas flow directed from the gas inlet 41b to the gas outlet 41f is faster than any other gas flows directed to the other directions. The gas flow directed from the gas inlet 41b to the gas outlet 41f generates a tumble flow in the combustion chamber 4r. The tumble flow will be described in detail later.

The spark-ignition type engine 1 is an engine of intake pipe injection type. The fuel ignition part 6 is disposed so as to inject the fuel toward the gas inlet 41b of the single center tumble port (SCTP) 41a. The fuel ignition part 6 injects atomized fuel in a conical injection range 6a. The density of the injected fuel becomes higher as increasing proximity to a center 6c of the injection range. The density of the fuel becomes maximum at the center 6c of the injection range 6a.

The fuel ignition part 6 is disposed such that the center 6c of the injection range 6a of the fuel does not intersect the separation enhancing part 41p of the single center tumble port (SCTP) 41a. The fuel ignition part 6 is disposed such that the center 6c of the injection range of the fuel intersects the stem 81b of the intake valve 81. The center 6c, where the density of the fuel becomes maximum, of the injection range 6a does not intersect the separation enhancing part 41p. This can suppress or reduce a phenomenon that the fuel is adhered to the separation enhancing part 41p and is condensed at and/or in the vicinity of the separation enhancing part 41p. Consequently, it is possible to suppress or reduce a phenomenon that the condensed fuel is developed into a big lump (droplet) and intrudes the combustion chamber 4r intermittently. Thus, it is possible to suppress or reduce unintended fluctuations, i.e., intermittent fuel supply from the single center tumble port (SCTP) 41a. As a result, the thermal efficiency is improved.

More specifically, the fuel ignition part 6 is disposed such that the injection range 6a does not intersect the separation enhancing part 41p of the single center tumble port (SCTP) 41a. This can further suppress or reduce a phenomenon that the fuel is adhered to the separation enhancing part 41p and is condensed at and/or in the vicinity of the separation enhancing part 41p. As a result, the thermal efficiency is further improved.

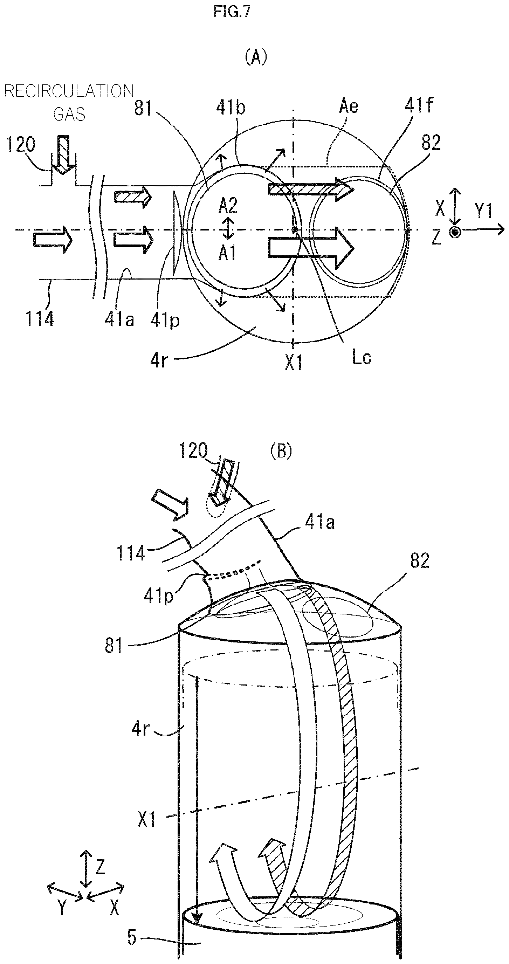

FIG. 7 is a view for schematically explaining how gas flows in the combustion chamber of the spark-ignition type engine shown in FIG. 2. FIG. 7(A) is a plan view illustrating an intake stroke, and FIG. 7(B) is a perspective view illustrating the intake stroke.

As shown in FIG. 7(B), during the intake stroke, the piston part 5 moves from the top dead point toward the bottom dead point. In the intake stroke, the intake valve 81 opens the gas inlet 41b. Consequently, the gas enters the combustion chamber 4r through the single center tumble port (SCTP) 41a and the gas inlet 41b.

As shown in FIG. 7(A), the exhaust recirculation passage 120 of the present embodiment is connected to the intake pipe 114 such that the exhaust recirculation passage 120 is opened to the second area A2 in the intake pipe 114. Thus, most of the recirculation gas (indicated by the diagonally shaded arrow) supplied from the exhaust recirculation passage 120 is distributed in the second area A2 of the single center tumble port (SCTP) 41a.

As shown in FIG. 7(A), the extending area Ae extending from the gas inlet 41b in the intake direction Y1 when viewed in the reciprocation direction Z overlaps the gas outlet 41f. Thus, most of the gas having entered the combustion chamber 4r through the gas inlet 41b after flowing through the single center tumble port (SCTP) 41a in the intake direction Y1 as shown in FIG. 7(A) flows in the direction toward the gas outlet 41f, i.e., the intake direction Y1, due to the structure of the single center tumble port (SCTP) 41a. More specifically, the gas flow through the separation enhancing part (SCTP) 41a is separated from the wall surface of the single center tumble port 41a by the separation enhancing part 41p. Thus, among the gas flows introduced into the combustion chamber 4r through an annular gap between the gas inlet 41b and the intake valve 81, a gas flow directed from the gas inlet 41b to the gas outlet 41f is faster than any gas flows directed to the other directions. Most of the gas having entered the combustion chamber 4r from the gas inlet 41b flows along the valve surface portion of the exhaust valve 82, and further flows toward the bottom dead point of the piston part 5 as if the gas is drawn by the piston part 5. Consequently, a tumble flow is generated in the combustion chamber 4r. The tumble flow refers to a revolving around an axial line X1 extending in a direction intersecting the reciprocation direction Z. In the example shown in the present embodiment in FIG. 7, the axial line X1 is substantially in parallel with the crankshaft direction X. The valve surface portion is a planar portion facing the combustion chamber.

The spark-ignition type engine 1 includes the gas inlet 41b of the one single center tumble port (SCTP) 41a and the gas outlet 41f of the one exhaust port 41e. Unlike an engine including three or more gas inlets and exhaust vents, for example, the spark-ignition type engine 1 includes the one gas inlet 41b and the one gas outlet 41f disposed such that the gas inlet 41b and the gas outlet 41f overlap the diameter of the combustion chamber 4r, which is common to the gas inlet 41b and the gas outlet 41f, when viewed in the reciprocation direction Z. That is, the one gas inlet 41b and the one gas outlet 41f are disposed on a straight line that passes through the center line Lc of the combustion chamber 4r and that is in parallel with the intake direction Y1 when viewed in the reciprocation direction Z. Thus, of the gas flows having entered the combustion chamber 4r from the gas inlet 41b, a gas flow passing in the vicinity of the center line Lc is the fastest.

The spark-ignition type engine 1 has the gas inlet 41b, which is larger than each of those in an engine having plural gas inlets, for example. Thus, when viewed in the reciprocation direction Z, a gas flow directed from the gas inlet 41b to the gas outlet 41f is generated. This gas flow constitutes a cluster with a wide width in the crankshaft direction X.

The offset ignition part 7a (see FIG. 2) of the spark-ignition type engine 1 is disposed in the first area A1 of the combustion chamber such that the offset ignition part 7a does not overlap the center passing line S. Thus, the gas inlet 41b of the present embodiment is larger than that in a configuration in which an ignition part is disposed at a center of a combustion chamber 4f when viewed in a reciprocation direction Z, for example. Also with this, the wide gas flow directed from the gas inlet 41b to the gas outlet 41f is generated.

In this manner, by the gas having entered the combustion chamber 4r from the gas inlet 41b, a tumble flow that has a wide width and that flows fast in its center portion in a width direction (in the present embodiment, the direction of the axial line X1) is generated.

The spark-ignition type engine 1 has the gas inlet 41b, which is larger than each of those in an engine having plural gas inlets, for example. However, the area of the gas inlet 41b is smaller than the sum of the areas of those in the engine having the plural gas inlets, for example. The smaller the opening is, the faster the gas passes therethrough. Thus, the gas passing through the gas inlet 41b of the single center tumble port (SCTP) 41a generates a tumble flow faster than that in the engine having the plural gas inlets.

The single center tumble port (SCTP) 41a of the spark-ignition type engine 1 generates, in the cylinder part 4, a tumble flow whose tumble ratio is greater than 0.3.

The tumble ratio is an index indicating an intensity of a tumble flow. The tumble ratio is an index indicating a speed of a tumble flow.

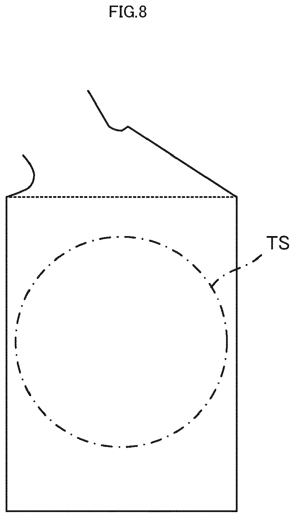

FIG. 8 is a view for explaining a method of calculating a tumble ratio. FIG. 8 schematically shows an internal structure of the cylinder part 4.

For the calculation of the tumble ratio, a space that is called a tumble sphere TS is defined in the cylinder part 4. Based on an angular velocity of the gas inside the sphere, which is the tumble sphere TS, a tumble ratio is calculated.

In this manner, as shown in FIG. 7(B), a tumble flow that has a wide width and that flows at the highest speed in its center portion in the width direction is generated in the combustion chamber 4r. The tumble flow that flows at the highest speed in its center portion is generated as a result of movement of the piston part 5 in the stroke St, which is longer than the diameter B of the combustion chamber 4r. Thanks to the tumble flow that flows at the highest speed in its center portion in the width direction, it is possible to suppress or reduce the turbulence in the flow. Such a tumble flow tends to maintain its speed for a long period of time. As a result of generation of a tumble whose tumble ratio is more than 0.3, a period of time required for gas combustion is further shortened.

In the combustion chamber 4r, a tumble flow with less turbulence is generated. Consequently, the tendency of the distribution of the recirculation gas in the crankshaft direction X in the combustion chamber 4r becomes approximate to the tendency of the distribution of the gas in the single center tumble port (SCTP) 41a.

In addition, in the combustion chamber 4r, the tumble flow that has a wide width and that flows fast in its center portion in the width direction (in the present embodiment, the direction of the axial line X1) is generated. Therefore, it is possible to suppress or reduce the turbulence in the flow. Such a tumble flow tends to maintain its speed for a long period of time. Consequently, the tendency of the distribution of the recirculation gas in the crankshaft direction X in the combustion chamber 4r tends to be maintained. As a result, most of the recirculation gas is distributed in the second area A2 in the combustion chamber 4r.

During a compression stroke following the intake stroke, the piston part 5 moves toward the top dead point. That is, the piston part 5 is raised from the bottom dead point. During the intake stroke, the gas is discharged from the gas inlet 41b, flows along the valve surface of the exhaust valve 82, and then flows toward the piston part 5, as shown in FIG. 7(B). Then, during the compression stroke, the gas is pushed by the piston part 5. The gas having been pushed by the piston part 5 flows toward the gas inlet 41b. Consequently, the tumble flow is maintained. The stroke St, in which the piston part 5 moves, is longer than the diameter B of the combustion chamber 4r. Therefore, the piston part 5 moves fast during the compression stroke. Thus, by the gas pushed by the piston part 5, a fast tumble flow tends to be maintained.

Consequently, the distribution of the recirculation gas in the crankshaft direction X in the combustion chamber 4r tends to be maintained.

In addition, as shown in FIG. 2(A), at least the periphery part of the ceiling part 41r of the combustion chamber 4r includes the non-squish area NS, which resides in the gas inlet vicinity area Ar. Thus, the turbulence in the tumble flow in the combustion chamber 4r can be suppressed or reduced. Also with this, the distribution of the recirculation gas in the crankshaft direction X in the combustion chamber 4r tends to be maintained.

Since the distribution of the recirculation gas in the combustion chamber 4r is maintained, most of the recirculation gas is distributed in the second area A2 at the time of spark ignition. Consequently, most of the fresh air, which has a high oxygen concentration, is distributed in the first area A1, which is in the combustion chamber 4r and is close to the offset ignition part 7a. In addition, most of the recirculation gas, which has a high specific heat capacity, is distributed in the second area A2, which is far away from the offset ignition part 7a.

Such an uneven distribution of the recirculation gas is suitable for a case of selecting, as a characteristic of the spark-ignition type engine 1, combustion operation in which rapid combustion is promoted after ignition by the offset ignition part 7a while heat dissipation to the outside of the combustion chamber 4r is suppressed or reduced. In response to ignition by the offset ignition part 7a disposed in the first area A1, the gas in the first area A1, which contains a large amount of fresh air, is combusted in a short time. The gas in the second area A2, which is far away from the offset ignition part 7a, contains a large amount of recirculation gas. Thanks to the recirculation gas, which has a high specific heat capacity, it is possible to suppress or reduce a phenomenon that the heat resulting from the combustion of the gas in the first area A1 is dissipated to the piston part 5 and the cylinder part 4.

At the time of spark ignition, the fast tumble flow in the combustion chamber 4r is turned into a fast turbulent flow. This also facilitates propagation of the flame in a short time.

The diameter B of the combustion chamber 4r is shorter than the stroke St, in which the piston part 5 moves in a reciprocating manner, when viewed in the reciprocation direction Z. Since the diameter B is short, the combustion chamber 4r defined by the piston part 5 located at the top dead point achieves a lower flattening. This reduces a maximum distance by which the flame propagates after ignition by the offset ignition part 7a. Also with this, the combustion period is reduced.

The offset ignition part 7a of the spark-ignition type engine 1 is disposed at a location offset from the center of the combustion chamber 4r when viewed in the reciprocation direction Z. However, since the spark-ignition type engine 1 of the present embodiment involves the fast tumble flow and the reduced maximum distance of flame propagation, the offset location of the offset ignition part 7a hardly affects the combustion period.

As described above, since the fast tumble flow is maintained in the combustion chamber and the flame propagation distance is reduced, a period of time required for gas combustion is shortened. Thanks to the shortened period of time for gas combustion, the thermal efficiency of the spark-ignition type engine 1 is improved.

In the spark-ignition type engine 1, since the period of time required for combustion is shortened, occurrence of knocking can be suppressed or reduced. In addition, since the spark-ignition type engine 1 is a water-cooled engine, occurrence of the knocking can be suppressed or reduced. Thus, in the spark-ignition type engine 1, it is possible to set a higher compression ratio than those of conventional engines, while suppressing or reducing occurrence of knocking. Consequently, the thermal efficiency of the spark-ignition type engine 1 is further improved.

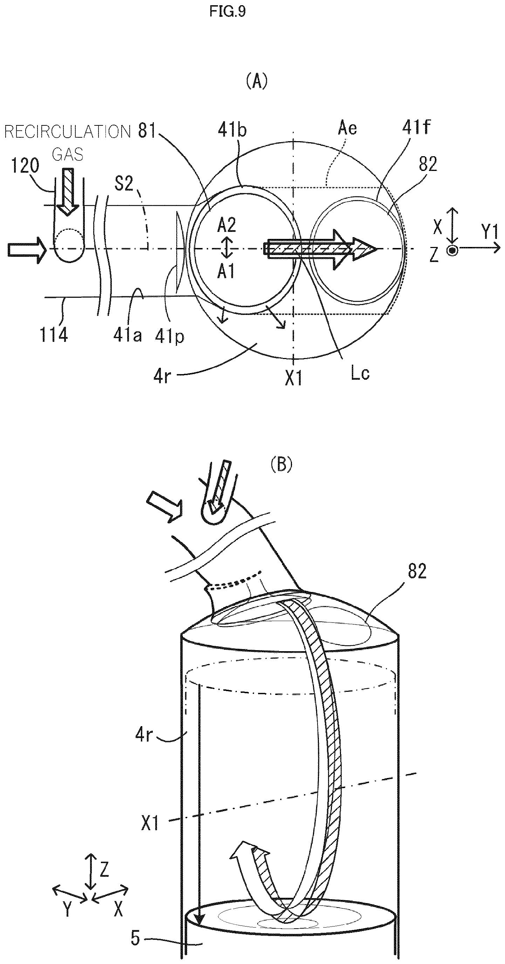

FIG. 9 is a view for explaining a variation of the spark-ignition type engine unit according to the present embodiment. FIG. 9(A) is a plan view illustrating an intake stroke and schematically explaining how gas flows in a combustion chamber of the spark-ignition type engine according to the variation. FIG. 9(B) is a perspective view illustrating the intake stroke.

In the variation shown in FIG. 9, an exhaust recirculation passage 120 is opened to the inside of an intake pipe 114 at a location overlapping a center line S2 of the intake pipe 114 when viewed in a reciprocation direction Z. In this case, in a single center tumble port (SCTP) 41a, a distribution of recirculation gas supplied from the exhaust recirculation passage 120 becomes uneven when viewed in the reciprocation direction Z.

However, a gap between the gas inlet 41b and the intake valve 81 is short in length, the gap corresponding to the distribution in the single center tumble port (SCTP) 41a viewed in the reciprocation direction Z. Through the gap between the gas inlet 41b and the intake valve 81, stratification of the fresh air and the recirculation gas passes. Therefore, the recirculation gas and the fresh air are easily mixed with each other in the combustion chamber 4r. Consequently, the recirculation gas is uniformly dispersed in the combustion chamber 4r.

Such a distribution in which the recirculation gas is uniformly dispersed is suitable for a case of selecting, as a combustion operation characteristic of the spark-ignition type engine 1, combustion operation in which a gas combustion speed is made constant after ignition by the offset ignition part 7a.

In the present embodiment shown in FIG. 7 and the variation shown in FIG. 9, the recirculation gas taken out from the exhaust pipe 118 via the exhaust recirculation passage 120 is introduced into the combustion chamber 4r through the single center tumble port (SCTP) 41a together with the fresh air. Consequently, a tumble flow is generated in the combustion chamber 4r. The fresh air flows through the throttle body 116, the intake pipe 114, and the single center tumble port (SCTP) 41a not through a surge tank.

Therefore, by suitably changing the merging location of the recirculation gas as in the examples shown in FIGs. 7 and 9, it is possible to increase the unevenness in the distribution of the recirculation gas in the combustion chamber 4r or to eliminate the unevenness so as to yield a uniform distribution of the recirculation gas.

For example, in a case where recirculation gas and fresh air are mixed with each other in a surge tank, the recirculation gas and the fresh air are uniformized before passing through the single center tumble port (SCTP) 41a. Thus, it is difficult to design an uneven distribution of recirculation gas in a combustion chamber. Also in a case where recirculation gas and fresh air are mixed with each other at a location downstream of a surge tank, it is difficult to design an uneven distribution of recirculation gas in a combustion chamber. The reason for this is as follows. That is, the surge tank has a negative internal pressure for a certain period so that gas is supplied to combustion chambers typically provided in plural cylinders. During a period in which the surge tank has a negative internal pressure, the recirculation gas merged with the fresh air at a location downstream of the surge tank may occasionally flow toward the surge tank, i.e., upstream. After flowing upstream, the gas containing the recirculation gas flows downstream. Then, the gas passes through the merging location, so as to be supplied to the combustion chamber. That is, the recirculation gas mixed with the fresh air flows upstream once, and then flows downstream. Consequently, the recirculation gas and the fresh air tend to be mixed uniformly. Therefore, it is difficult to design an uneven distribution of the recirculation gas in the combustion chamber.

On the other hand, according to the present embodiment, by suitably changing the merging location of the recirculation gas, it is possible to increase the unevenness in the distribution of the recirculation gas in the combustion chamber 4r or to eliminate the unevenness so as to yield a uniform distribution of the recirculation gas.

The configuration of facilitating maintaining the distribution of the recirculation gas by making use of the tumble flow generated by the single center tumble port is applicable also to other cases than the examples shown in FIGs. 7 and 9.

For example, in a case where an ignition plug is disposed at a center of a combustion chamber when viewed in a reciprocation direction Z, an exhaust recirculation passage is disposed so as to be opened to two portions of first and second areas in an intake pipe. In this case, in the combustion chamber, a recirculation gas concentration is low in a center area close to a center passing line, whereas the recirculation gas concentration is high in an area outside the center area, when viewed in the reciprocation direction. Such a distribution in the combustion chamber tends to be maintained until an ignition timing, thanks to a tumble flow generated by a single center tumble port.

In the combustion chamber, the recirculation gas concentration is low in the area close to the ignition plug, which is disposed at the center of the combustion chamber, whereas the recirculation gas concentration is high in the two areas far away from the ignition plug, when viewed in the reciprocation direction Z.

As described above, there is no particular limitation on the merging location of the recirculation gas in the circumferential direction of the intake pipe and the center tumble port. Also, there is no particular limitation on the number of merging locations. In addition, the merging location of the recirculation gas in the flow direction of the intake pipe and the center tumble port only needs to be interposed between the throttle body and the gas inlet. Also, there is no particular limitation on the number of merging locations. In a configuration in which the recirculation gas is merged at a more downstream location, a period of time taken for the recirculation gas to enter the combustion chamber is shortened, which makes it possible to increase the unevenness in the distribution of the recirculation gas in the combustion chamber. Meanwhile, in a configuration in which the recirculation gas is at a more upstream location, a period of time taken for the recirculation gas to enter the combustion chamber is elongated, which makes it is possible to alleviate the unevenness in the distribution of the recirculation gas in the combustion chamber.

By suitably changing the merging location of the recirculation gas, it is possible to enhance the freedom in designing the distribution of the recirculation gas in the combustion chamber 4r.

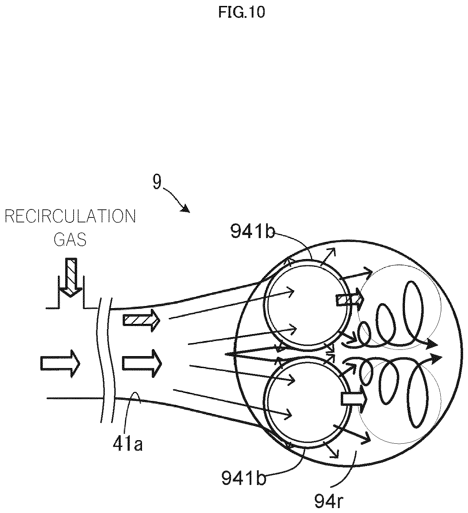

FIG. 10 is a plan view for explaining how gas flows in a spark-ignition type four-valve engine shown as a comparative example.

An engine 9 in FIG. 10, which is shown as a comparative example, includes four valves. The engine 9 of the comparative example has two gas inlets 941b for gas, which are disposed in a dispersed manner. Therefore, streams of gas from the gas inlets 941b flow slower than that in the present embodiment including the one gas inlet 41b (see FIG. 7).

Among the gas flows introduced into the combustion chamber 94r through the gas inlets 941b, gas flows directed diagonally with respect to an intake direction so as to come closer to each other and collide with each other at a center portion, thus causing turbulence. Thus, immediately after the gas is introduced into the combustion chamber 94r, the gas is stirred. Therefore, even if the recirculation gas is distributed unevenly in a crankshaft direction in a similar manner to the embodiment shown in, e.g., FIG. 7, the recirculation gas will be mixed with the fresh air. Since the collision of the gas flows introduced through the two gas inlets 941b causes the stirring of the gas introduced into the combustion chamber 94r, it is difficult to control the degree of the stirring. Thus, the engine 9 of the comparative example has a lower degree of freedom in designing the distribution of the exhaust gas in the combustion chamber.

On the other hand, according to the present embodiment, by suitably changing the merging location of the recirculation gas as shown in FIGs. 7 or 9, it is possible to increase the unevenness in the distribution of the recirculation gas in the combustion chamber 4r or conversely to eliminate the unevenness so as to yield a uniform distribution of the recirculation gas.

Thus, with the spark-ignition type engine unit EU1 of the present embodiment, it is possible to enhance the degree of freedom in designing the distribution of the exhaust gas in the combustion chamber 4r of the spark-ignition type engine.

In addition, with the spark-ignition type engine 1 of the present embodiment, it is possible to enhance the thermal efficiency by shortening the combustion period by making use of a fast tumble flow, and also to select and set the distribution of the exhaust gas in the combustion chamber 4r by making use of the tumble flow that tends to be maintained. Thus, the spark-ignition type engine 1 of the present embodiment achieves high thermal efficiency and a high degree of freedom in designing the distribution of the exhaust gas.

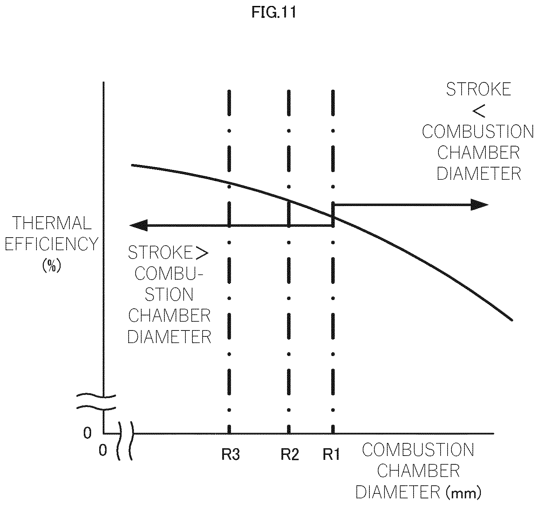

FIG. 11 is a graph showing a relation between the diameter of the combustion chamber and the thermal efficiency of the spark-ignition type engine.

FIG. 11 shows, as an example, thermal efficiencies (indicated thermal efficiencies) calculated from varied diameters of a combustion chamber and varied strokes of a piston part of a spark-ignition type engine whose stroke capacity is fixed at 0.15 L are varied. The spark-ignition type engine subjected to the simulation has an identical configuration to that shown in FIGs. 2 and 3, except for the diameter of the combustion chamber and the stroke of the piston part. That is, the spark-ignition type engine subjected to the calculation includes a single center tumble port (SCTP) 41a.

In an area where the diameter of the combustion chamber is shorter than R1, i.e., an area on the left of R1 in the graph shown in FIG. 11, the stroke of the piston part is longer than the diameter of the combustion chamber.

In an area where the diameter of the combustion chamber is shorter than R2, i.e., an area on the left of R2 in the graph shown in FIG. 11, the stroke of the piston part is longer than 1.2 times of the diameter of the combustion chamber.

In an area where the diameter of the combustion chamber is shorter than R3, i.e., an area on the left of R2 in the graph shown in FIG. 11, the stroke of the piston part is longer than 1.5 times of the diameter of the combustion chamber.

As shown in FIG. 11, thanks to the configuration in which the stroke St of the piston part is longer than the diameter B of the combustion chamber, the spark-ignition type engine 1 including the single center tumble port (SCTP) 41a and the offset ignition part 7a can achieve high thermal efficiency. Thus, the thermal efficiency is high.

In the area where the stroke of the piston part is longer than 1.2 times of the diameter of the combustion chamber, the degree of increase in indicated thermal efficiency is substantially saturated. That is, the indicated thermal efficiency is hard to increase relative to the increase in stroke. In the area where the stroke of the piston part is longer than 1.2 times of the diameter of the combustion chamber, the indicated thermal efficiency becomes higher.

In the area where the stroke of the piston part is longer than 1.5 times of the diameter of the combustion chamber, the degree of increase in indicated thermal efficiency is further saturated. That is, the indicated thermal efficiency is harder to increase relative to the increase in stroke. In the area where the stroke of the piston part is longer than 1.5 times of the diameter of the combustion chamber, the indicated thermal efficiency increases more stably, as the moving speed of the piston part increases.

By selecting the stroke of the piston part, it is possible to enhance the degree of freedom in designing the distribution of the exhaust gas in the combustion chamber while increasing the thermal efficiency.

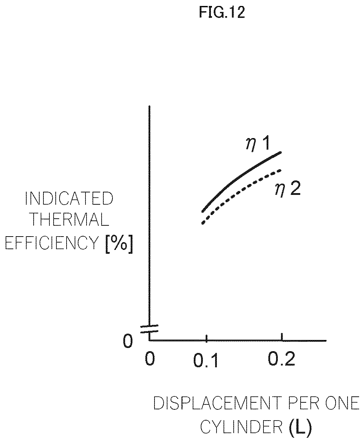

FIG. 12 is a graph showing a relation between a stroke capacity and thermal efficiency of an engine.

The graph in FIG. 12 shows a relation between the stroke capacity and the thermal efficiency of the engine under a fixed compression ratio. In the graph shown in FIG. 10, the horizonal axis indicates the stroke capacity of the engine. The stroke capacity refers to a stroke capacity (displacement) per cylinder part. Meanwhile, the vertical axis indicates the thermal efficiency (indicated thermal efficiency). In the graph, the solid line η1 indicates the results of a tentative calculation of thermal efficiency in an engine model including the single center tumble port (SCTP) of the present embodiment. In the graph, the broken line η2 indicates the results of a tentative calculation of thermal efficiency in an engine model not including the single center tumble port (SCTP).

In a case where the configuration of the spark-ignition type engine 1 of the present embodiment is applied to a spark-ignition type engine with a stroke volume of less than 0.2 L, which has thermal efficiency apt to decrease, this spark-ignition type engine can achieve a higher degree of freedom in designing a distribution of exhaust gas in a combustion chamber for suppressing or reducing decrease in thermal efficiency, as compared to a configuration in which some of the exhaust gas and gas flowing through a surge tank are introduced through a single center tumble port (SCTP) 41a, for example. That is, when the engine is designed to suppress or reduce the decrease in thermal efficiency, the engine can attain a higher degree of freedom in designing the distribution of the exhaust gas in the combustion chamber, while avoiding upsizing.

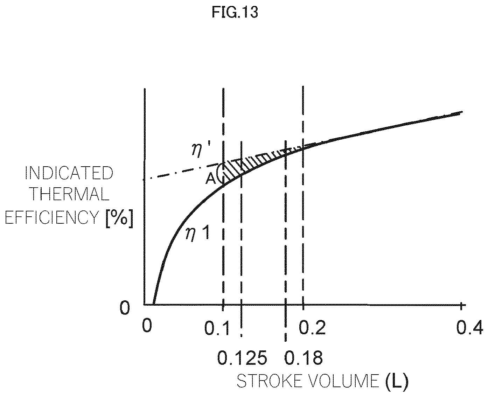

FIG. 13 is a graph showing a relation between a stroke capacity and indicated thermal efficiency of a general engine.

FIG. 13 shows, as a reference example, the stroke capacity and the indicated thermal efficiency of the general engine. The indicated thermal efficiency is thermal efficiency calculated without consideration of a mechanical loss. In the reference example, the stroke of the piston part is equal to the diameter of the combustion chamber.

General engines as those represented by the reference example shown in FIG. 13 have the following tendency. That is, as the size of the engine decreases, the indicated thermal efficiency decreases, due to a relation between the volume and the surface area. This is because that the volume is closely related to a heat quantity to be generated and the surface area is closely related to a heat loss caused by heat dissipation.

As shown in FIG. 13, in a case of an engine with a stroke capacity of less than 0.2 L, the indicated thermal efficiency decreases acceleratedly as the stroke capacity decreases. That is, the tendency of the decrease in indicated thermal efficiency is greatly deviated from the straight line (dot-and-dash line) η' indicating the tendency of the decrease in indicated thermal efficiency of a large engine with a stroke capacity of 0.4 L or more, for example. The indicated thermal efficiency drops remarkably at a stroke capacity of less than 0.15 L. That is, the deviation from the straight line (dot-and-dash line) η' appears at a stroke capacity of less than 0.2 L, and becomes remarkable at a stroke capacity of less than 0.18 L.

In the spark-ignition type two-valve engine 1 shown in FIGs. 1 to 10, a fast tumble flow is generated by gas introduced into the cylinder part 4 through the single center tumble port (SCTP) 41a having the separation enhancing part 41p (see FIG. 5), and consequently the indicated thermal efficiency increases. The increase in indicated thermal efficiency can compensate for a decrease in indicated thermal efficiency in a general engine downsized to a stroke capacity of 0.1 L. Thus, when the configuration shown in FIG. 1 to 10 is applied to a spark-ignition type two-valve engine with a stroke capacity of 0.1 L or more and less than 0.2 L, the engine can include a cylinder part 4 and a single center tumble port (SCTP) 41a having a separation enhancing part 41p. Consequently, the engine can attain improved thermal efficiency and an enhanced degree of freedom in designing a distribution of exhaust gas in a combustion chamber.

In a spark-ignition type two-valve engine with a stroke capacity of 0.125 L or more, an increase in indicated thermal efficiency due to generation of a tumble flow provides an adequate margin for a decrease in indicated thermal efficiency caused by downsizing.

With the configuration shown in FIGs. 1 to 10, it is possible to enhance the degree of freedom in designing the distribution of the exhaust gas in the combustion chamber as well as to improve the thermal efficiency of the spark-ignition type two-valve engine with a stroke capacity of less than 0.2 L, in which the thermal efficiency decreases remarkably as indicated by the reference example.

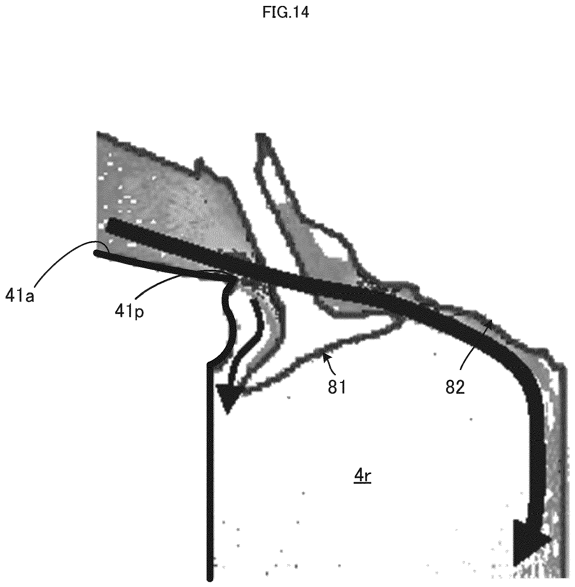

FIG. 14 is a view for explaining how gas flows in the spark-ignition type two-valve engine 1 shown in FIGs. 1 to 10. FIG. 14 shows the result of a simulation of a gas flow during an intake stroke of the spark-ignition type two-valve engine 1 shown in FIGs. 1 to 10. A stronger (darker) indication tone means a faster flow rate.

Gas introduced into the cylinder part 4 through the single center tumble port (SCTP) 41a is easy to be separated from the wall surface at the separation enhancing part 41p. The gas thus separated is likely to flow in an extension direction of the single center tumble port (SCTP) 41a. Thus, among the gas introduced into the combustion chamber 4r from the single center tumble port (SCTP) 41a, gas flowing toward the valve surface of the exhaust valve 82 increases its flow rate and speed.

On the other hand, gas introduced into the combustion chamber 4r from a location farther away from the exhaust valve 82 than is the intake valve 81 decreases its amount and flow speed.

Consequently, after the gas flows along the valve surface of the exhaust valve 82, a fast tumble flow directed toward the piston part 5 (FIG. 1) is generated.

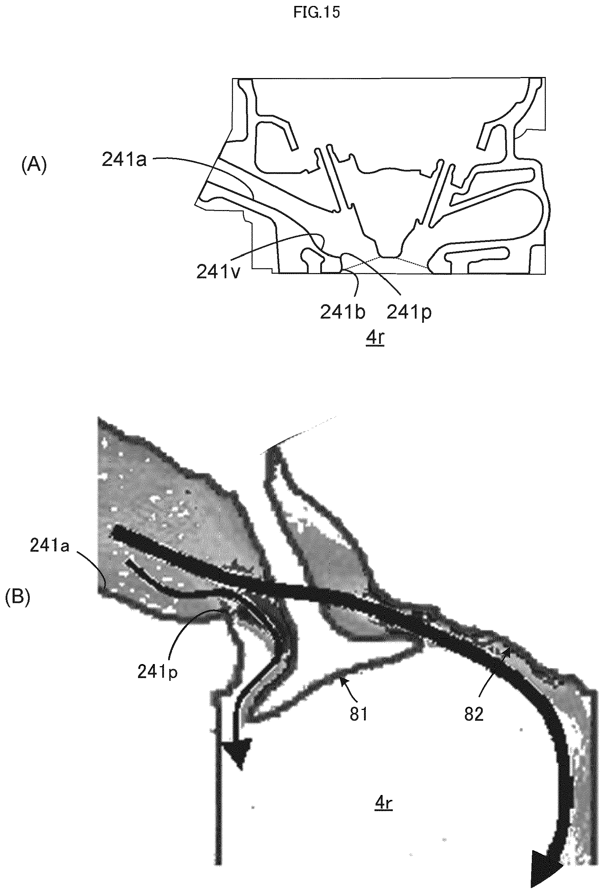

FIG. 15(A) is a view showing a variation of the port of the spark-ignition type engine. FIG. 15(B) is a view for explaining how gas flows in the spark-ignition type engine shown in FIG. 15(A). FIG. 15(B) shows the result of a simulation of a gas flow during the intake stroke.

A single center tumble port (SCTP) 241a shown in FIG. 15(A) has a separation enhancing part 241p. The separation enhancing part 241p has a structure for separating, from the wall surface continuous with a gas inlet 241b, gas that is to be sent to the gas inlet 241b so as to cause the gas introduced into a combustion chamber 4r (see FIG. 5) from the gas inlet 241b to generate a tumble flow. More specifically, the separation enhancing part 241p has a structure for separating the gas from a portion of the circumference defining the gas inlet 241b of the single center tumble port (SCTP) 241a, the portion being farther from a gas outlet 41f (see FIG. 2) than any other portions of the circumference. More specifically, when seen in a cross-section passing through the gas inlet 241b and the gas outlet 41f (see FIG. 2), the separation enhancing part 241p is a fold-back shape portion located at least at the portion of an annular band portion of the wall surface constituting the single center tumble port (SCTP) 241a, the annular band portion being adjacent to the gas inlet 241b, the portion of the annular band portion being farther from the gas outlet 41f than any other portions of the annular band portion. The separation enhancing part 41p has a shape sharply folded back toward a direction away from a center line of the single center tumble port (SCTP) 241a. In other words, the separation enhancing part 241p has a shape sharply folded back toward a direction away from the gas outlet 41f. The separation enhancing part 241p has a shape sharply folded back at a right angle or an acute angle when seen in the cross-section passing through the gas inlet 241b and the gas outlet 41f (see FIG. 2). The separation enhancing part 241p has a shape sharply folded back at a right angle when seen in the cross-section shown in FIG. 15(A). In a micro view, the separation enhancing part 241p does not have an edge, but is folded back while being curved.

The separation enhancing part 241p is a protrusion protruding toward the inside of the single center tumble port (SCTP) 241a.

The single center tumble port (SCTP) 241a shown in FIG. 15(A) has a recessed portion 241v at a location upstream of the separation enhancing part 241p in a gas flow direction. The recessed portion 241v, which is adjacent to the separation enhancing part 241p, has a curved surface when viewed in a cross-section taken along a direction in which the single center tumble port (SCTP) 241a extends. Thanks to the recessed portion 241v provided so as to be adjacent to the separation enhancing part 241p, the separation enhancing part 241p achieves the shape sharply folded back toward a direction away from the gas outlet 41f.

Thus, the inner wall of the single center tumble port (SCTP) 241a is not substantially continuous at the separation enhancing part 241p in the direction in which the single center tumble port (SCTP) 241a extends. By the recessed portion 241v and the separation enhancing part 241p, the gas is separated from the wall surface.

As shown in FIG. 15(B), gas introduced into the cylinder part 4 from the single center tumble port (SCTP) 241a is easy to be separated from the wall surface at the separation enhancing part 241p. The gas thus separated tends to flow in the direction in which the single center tumble port (SCTP) 241a extends. Thus, among the gas introduced into the combustion chamber 4r from the single center tumble port (SCTP) 241a, gas flowing toward the valve surface of the exhaust valve 82 increases its flow rate and speed. On the other hand, gas introduced into the combustion chamber 4r from a location farther away from the exhaust valve 82 than is the intake valve 81 decreases its amount and flow speed.

Consequently, after the gas flows along the valve surface of the exhaust valve 82, a fast tumble flow directed toward the piston part 5 (FIG. 2) is generated.

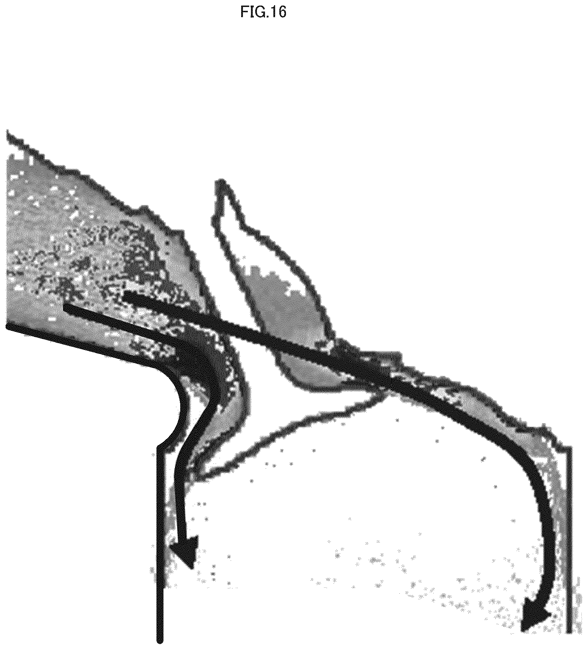

FIG. 16 is a view for explaining how gas flows in a comparative example.

A single center tumble port (SCTP) shown in FIG. 16 does not have a separation enhancing part 241p. Gas passing through the single center tumble port (SCTP) is hard to be separated from the wall surface. Thus, among the gas introduced into a combustion chamber 4r from a single center tumble port (SCTP) 241a, gas flowing toward a valve surface of an exhaust valve 82 is low in flow rate and speed. On the other hand, gas introduced into the combustion chamber 4r from a location farther away from the exhaust valve 82 than is the intake valve 81 is higher in amount and flow speed, as compared to the configuration shown in FIG. 15(B), for example.

Consequently, after the gas flows along the valve surface of the exhaust valve 82, a tumble flow directed toward the piston part 5 (FIG. 2) becomes slow.

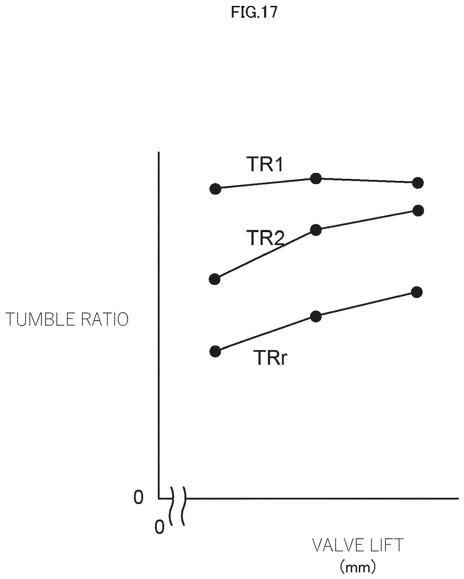

FIG. 17 is a graph showing tumble ratios in the configurations shown in FIGs. 14, 15, and 16.

In the graph, TR1 indicates a tumble ratio of the configuration shown in FIG. 14. TR2 indicates a tumble ratio of the configuration shown in FIG. 15. TRr indicates a tumble ratio of the configuration of the comparative example shown in FIG. 16. The tumble ratios shown in FIG. 17 were obtained with different valve lifts of the intake valve 81.

With the configurations of the embodiment shown in FIGs. 14 and 15, it is possible to obtain a larger tumble ratio than that of the comparative example.

FIG. 18 is a side view of a straddled vehicle on which the spark-ignition type engine unit EU1 shown in FIG. 1 is mounted.

A straddled vehicle 100 shown in FIG. 18 includes a vehicle body 102 and wheels 103a and 103b. Specifically, the straddled vehicle 100 is a motorcycle. The straddled vehicle 100 is a scooter-type vehicle. The wheel 103b on the back side is a driving wheel. The vehicle body 102 is provided with a frame 104. The frame 104 includes a down frame 104a.

In addition, the straddled vehicle 100 includes an acceleration instruction unit 108. The acceleration instruction unit 108 is a manipulation piece for instructing the straddled vehicle 100 to accelerate according to a manipulation. The acceleration instruction unit 108 changes its position according to a manipulation. The acceleration instruction unit 108 is an accelerator grip.

With reference to FIG. 1, the following will describe the arrangement of parts of the spark-ignition type engine unit EU1.

The spark-ignition type engine 1 is disposed laterally in the straddled vehicle 100. That is, the spark-ignition type engine 1 is disposed such that an angle made by a horizontal plane and the reciprocation direction Z of the piston part 5 is smaller than an angle made by a vertical plane perpendicular to the front-back direction FB and the reciprocation direction Z.

The throttle body 116 of the spark-ignition type engine unit EU1 is disposed such that an angle θ1 made by the reciprocation direction Z of the piston part 5 and a center line 115a of the intake passage 115 in the throttle body 116 is smaller than an angle θ2 made by a plane V perpendicular to the reciprocation direction Z and the center line 115a. The throttle body 116 is disposed at a location overlapping the cylinder part 4 in the direction Y, which is perpendicular to the reciprocation direction Z.

The catalyst unit 119 is disposed at a location overlapping the cylinder part 4 in the direction Y, which is perpendicular to the reciprocation direction Z. That is, the catalyst unit 119 is disposed along the cylinder part 4. The catalyst unit 119 is disposed below the cylinder part 4 in a vertical direction of the straddled vehicle 100 standing upright.

Since the spark-ignition type engine unit EU1 is designed to be mounted on the straddled vehicle 100, the spark-ignition type engine unit EU1 is required to have a small size. For example, the cylinder part 4 of the spark-ignition type engine 1 included in the spark-ignition type engine unit EU1 is disposed above the down frame 104a in the vertical direction. The intake passage 115 and the throttle body 116 included in the spark-ignition type engine unit EU1 are also disposed above the down frame 104a.

In a space above the spark-ignition type engine unit EU1, a battery (not shown) or a storage part (not shown) is disposed, for example. The spark-ignition type engine unit EU1 is disposed in a limited space interposed between the down frame 104a and the battery or the storage part.

The combustion chamber 4r of the spark-ignition type engine included in the spark-ignition type engine unit EU1 shown in FIG. 1 has the diameter B, which is shorter than the stroke St (see FIG. 2) of the reciprocating movement of the piston part 5 when viewed in the reciprocation direction Z. Thus, a radial size of the cylinder part 4, which defines the combustion chamber 4r, is smaller than that of a cylinder part 4 whose diameter is longer than a stroke of a piston part, for example. Therefore, the above configuration has a high degree of freedom in positioning the throttle body 116, which is disposed at a location overlapping the cylinder part 4.

Thus, by disposing the throttle body 116 such that the angle θ1 made by the reciprocation direction Z and the center line 115a of the intake passage is smaller than the angle θ2 made by the plane V perpendicular to the reciprocation direction Z of the piston part 5 and the center line 115a as shown in FIG. 1, it is possible to position the intake passage 115 and the single center tumble port (SCTP) 41a along a curved line with a small curvature. This can suppress or reduce turbulence in the distribution of the recirculation gas and the fresh air in the single center tumble port (SCTP) 41a. In addition, this hardly inhibits generation of a fast tumble flow in the combustion chamber 4r. With the spark-ignition type engine unit EU1, it is possible to enhance the degree of freedom in designing the distribution of the exhaust gas in the combustion chamber 4r as well as to enhance the thermal efficiency by the fast tumble flow.

The catalyst unit 119 is disposed at a location overlapping the cylinder part 4 in the direction Y, which is perpendicular to the reciprocation direction Z. With this, it is possible to dispose the catalyst unit 119 close to the spark-ignition type engine 1. With the configuration in which the catalyst unit 119 is disposed close to the spark-ignition type engine 1, exhaust gas having a higher temperature is supplied to the catalyst in the catalyst unit 119, and therefore the purification performance of the catalyst is exerted more effectively after start-up of the engine, for example. However, in the configuration in which the catalyst unit 119 is disposed close to the spark-ignition type engine 1, a resistance of the catalyst unit 119 against a flow of exhaust gas discharged from the spark-ignition type engine 1 is great.

The catalyst unit 119 shown in FIGs. 18 and 1 is positioned so as to maintain a minimum road clearance of the spark-ignition type engine unit EU1 in the straddled vehicle 100. Thus, the positioning height of the catalyst unit 119 has a lower limit. However, the radial size of the cylinder part 4 is smaller than that of a cylinder part 4 whose diameter is longer than a stroke, for example. Therefore, the above configuration has a high degree of freedom in designing the shape of the catalyst unit 119. Thus, by adopting a catalyst unit 119 with a large diameter, for example, it is possible to suppress or reduce the resistance of the catalyst unit 119 against the flow of the exhaust gas. In this case, the resistance against the flow of the exhaust gas is suppressed or reduced, whereby the thermal efficiency of the spark-ignition type engine 1 is enhanced.

In addition, with the cylinder part 4 having a small radial size, it is also possible to enhance the degree of freedom in positioning the spark-ignition type engine 1 itself. For example, it is possible to position the spark-ignition type engine 1 at a lower location in the vertical direction, while maintaining the position and shape of the catalyst unit 119. Consequently, it is possible to position the intake passage 115 and the single center tumble port (SCTP) 41a along a curved line with a small curvature. This can suppress or reduce turbulence in the distribution of the recirculation gas and the fresh air in the single center tumble port (SCTP) 41a. Consequently, it is possible to enhance the degree of freedom in designing the distribution of the exhaust gas in the combustion chamber of the spark-ignition type engine 1.

In addition, since it is possible to position the intake passage 115 and the single center tumble port (SCTP) 41a along a curved line with a small curvature, generation of a fast tumble flow in the combustion chamber 4r is hardly hindered. Thanks to the fast tumble flow, the thermal efficiency is further improved.

As described above, with the spark-ignition type engine unit EU1 shown in FIG. 1, it is possible to enhance the degree of freedom in designing the distribution of the exhaust gas in the combustion chamber as well as to enhance the thermal efficiency, while maintaining the mountability of the spark-ignition type engine unit on the vehicle.

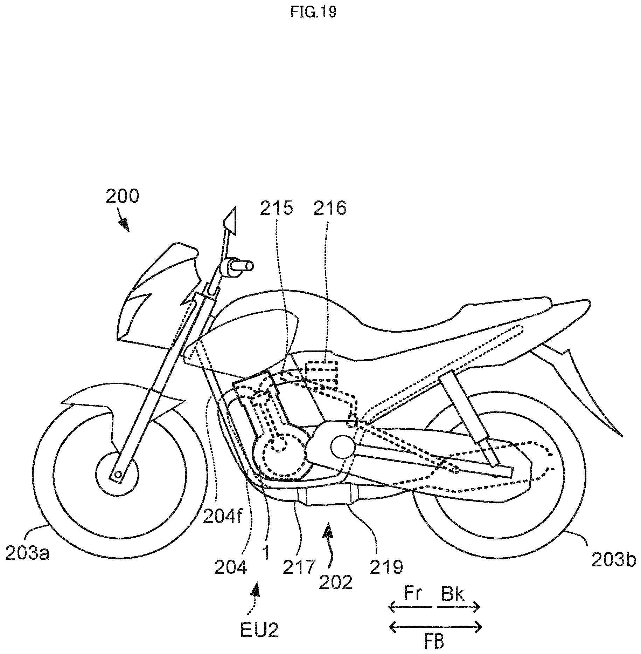

FIG. 19 is a side view showing another type of straddled vehicle, which is different from the straddled vehicle shown in FIG. 18.

A straddled vehicle 200 shown in FIG. 19 is a so-called street-type motorcycle. The straddled vehicle 200 includes a vehicle body 202 and wheels 203a and 203b. The vehicle body 202 is provided with a frame 204. The frame 204 includes a front frame 204f.

The straddled vehicle 200 includes a spark-ignition type engine unit EU2. The spark-ignition type engine unit EU2 includes a spark-ignition type engine 1, an intake passage 215, a throttle body 216, an exhaust passage 217, and a catalyst unit 219. The wheel 203b receives a rotational force from the spark-ignition type engine 1, and drives the straddled vehicle 200.

The throttle body 216 regulates a flow rate of fresh air that is to be supplied to the spark-ignition type engine 1.

The exhaust passage 217 allows gas discharged from the spark-ignition type engine 1 to pass therethrough. The catalyst unit 219 is disposed in the exhaust passage 217.

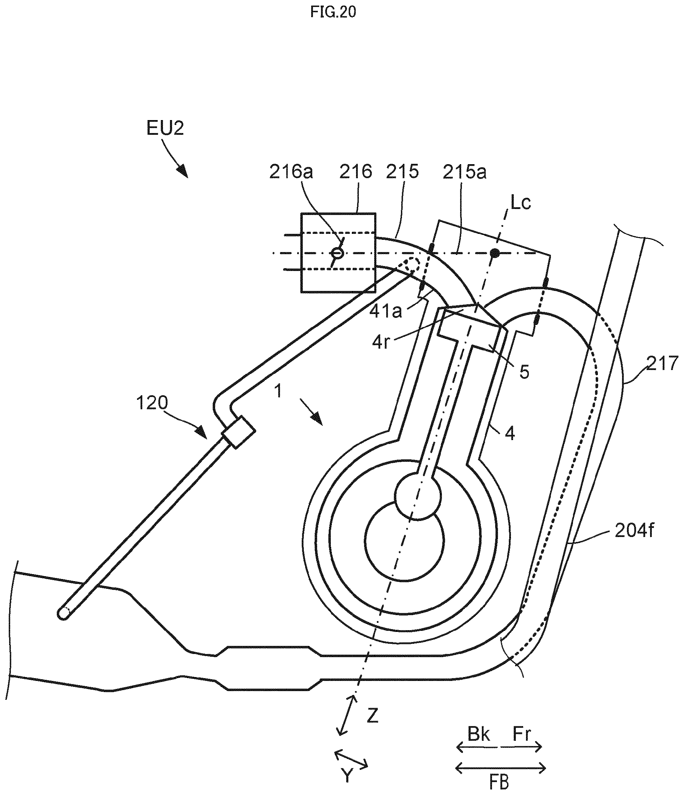

FIG. 20 is a view schematically showing a position of the spark-ignition type engine unit in the vehicle shown in FIG. 19.

The spark-ignition type engine 1 is disposed longitudinally in the straddled vehicle. That is, the spark-ignition type engine 1 is disposed such that an angle made by a horizontal plane and a reciprocation direction Z of a piston part 5 is greater than an angle made by a vertical plane and the reciprocation direction Z in the straddled vehicle 200.

The front frame 204f is disposed in front Fr of the spark-ignition type engine 1 in a front-back direction FB of the straddled vehicle 200.

The throttle body 216 of the spark-ignition type engine unit EU2 shown in FIG. 20 is disposed such that a center line Lc of the piston part 5 extending in the reciprocation direction Z of the piston part 5 intersects a center line 215a of the intake passage 215 in the throttle body 216.

The spark-ignition type engine unit EU2 shown in FIG. 20 is disposed in back Bk of the front frame 204f in the front-back direction FB. The combustion chamber 4r of the spark-ignition type engine has a diameter B, which is shorter than a stroke St (see FIG. 2) of reciprocating movement of the piston part 5 when viewed in the reciprocation direction Z. Thus, a radial size of the cylinder part 4, which defines the combustion chamber 4r, is smaller than that of a cylinder part 4 whose diameter is longer than a stroke of a piston part, for example. This enhances the degree of freedom in positioning the throttle body 216, which is disposed such that the center line of the piston part 5 intersects the center line 215a of the intake passage 215. Since the throttle body 216 can be disposed such that generation of a fast tumble flow in the combustion chamber 4r is hardly hindered, it is possible to generate a fast tumble flow.

As described above, with the spark-ignition type engine unit EU2, it is possible to enhance the degree of freedom in designing the distribution of the exhaust gas in the combustion chamber 4r of the spark-ignition type engine 1 as well as to further enhance the thermal efficiency.

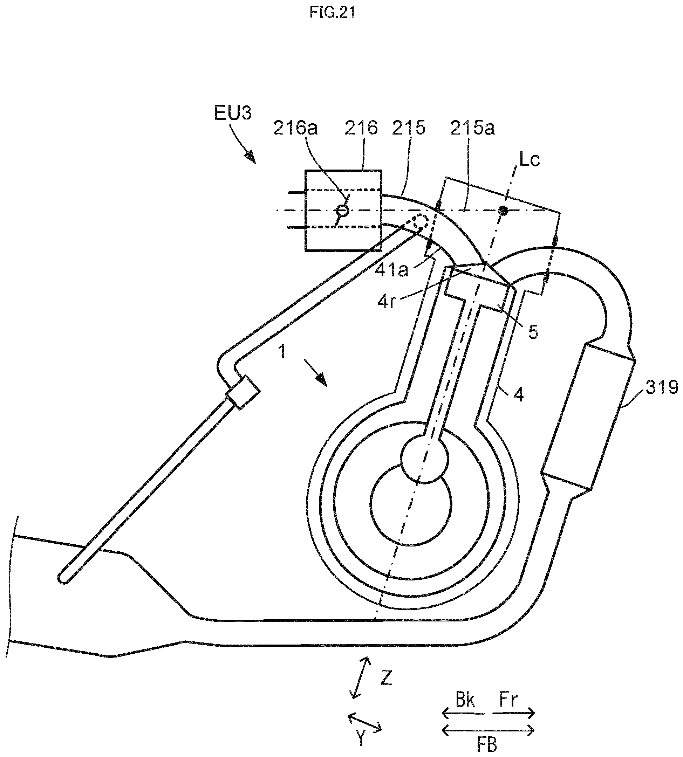

FIG. 21 is a view schematically showing a position of another type of spark-ignition type engine unit, which is different from that shown in FIG. 20.

A spark-ignition type engine unit EU3 shown in FIG. 21 includes a catalyst unit 319, which is positioned at a location different from that of the catalyst unit 219 shown in FIG. 19. FIG. 21 does not show the front frame 204f in order to clearly show the position of the catalyst unit 319. Except for this, the configuration in FIG. 21 is the same as the configuration in FIG. 20.

The catalyst unit 319 shown in FIG. 21 is disposed at a location overlapping a cylinder part 4 in a direction Y perpendicular to a reciprocation direction Z. That is, the catalyst unit 319 is disposed along the cylinder part 4. The catalyst unit 319 is disposed in front Fr of the cylinder part 4 in a front-back direction FB of a straddled vehicle on which the spark-ignition type engine unit EU3 is mounted.

Similarly to the spark-ignition type engine unit EU2 shown in FIG. 20, the spark-ignition type engine unit EU3 shown in FIG. 21 is also required to have a small size so that the spark-ignition type engine unit EU3 can be mounted on the straddled vehicle 200 (see FIG. 19). For example, the spark-ignition type engine unit EU3 is disposed so as to be spaced from the front wheel 203a (see FIG. 19).

A combustion chamber 4r of a spark-ignition type engine 1 included in the spark-ignition type engine unit EU3 has a diameter B, which is shorter than a stroke St (see FIG. 2) of reciprocating movement of a piston part 5 when viewed in the reciprocation direction Z. Thus, a radial size of a cylinder part 4, which defines the combustion chamber 4r, is smaller than that of a cylinder part 4 whose diameter is longer than a stroke of a piston part, for example. Therefore, the above configuration has a high degree of freedom in positioning the catalyst unit 319, which is disposed at a location overlapping the cylinder part 4.

In the spark-ignition type engine unit EU3 shown in FIG. 21, the catalyst unit 319 is disposed close to the spark-ignition type engine 1. Thus, the purification performance of the catalyst is exerted more effectively after start-up of the engine, for example. In addition, the catalyst unit 319 is disposed along the cylinder part 4 of the spark-ignition type engine 1 including the combustion chamber 4r having the diameter B shorter than the stroke St (see FIG. 2) of the reciprocating movement of the piston part 5. Therefore, it is possible to adopt a catalyst unit 319 having a large diameter, thus reducing a resistance that might occur when exhaust gas discharged from the spark-ignition type engine 1 passes through the catalyst unit 319. As described above, with the spark-ignition type engine unit EU3, it is possible to enhance the degree of freedom in designing the distribution of the exhaust gas in the combustion chamber 4r of the spark-ignition type engine as well as to enhance the thermal efficiency thanks to the reduction in the resistance against the flow of the exhaust gas during an exhaust stroke.

The present teaching is not limited to the examples described above. For example, the present teaching can adopt the following configurations (7) and (8). The following embodiments (8) and (9) may be achieved based on the above-described embodiments.

(8) The spark-ignition type engine unit according to any one of (1) to (6) is configured such that
the throttle body is disposed at a location where the throttle body overlaps the cylinder part in a direction perpendicular to the reciprocation direction of the piston part such that an angle made by the reciprocation direction of the piston part and a center line of an intake passage in the throttle body is smaller than an angle made by a plane perpendicular to the reciprocation direction of the piston part and the center line.

The combustion chamber of the spark-ignition type engine included in the spark-ignition type engine unit according to (8) has a diameter shorter than a stroke of the reciprocating movement of the piston part when viewed in the reciprocation direction. This can suppress or reduce an increase in radial size of the cylinder part, which defines the combustion chamber. Therefore, the above configuration has a high degree of freedom in positioning the throttle body, which is disposed at a location overlapping the cylinder part. Thus, in the case where the throttle body is disposed such that the angle made by the reciprocation direction of the piston part and the center line of the intake passage is smaller than the angle made by the plane perpendicular to the reciprocation direction of the piston part and the center line of the intake passage, it is possible to avoid a situation in which the intake passage is positioned such that generation of a fast tumble flow is hindered. Consequently, it is possible to enhance the degree of freedom in designing the distribution of the exhaust gas in the combustion chamber of the spark-ignition type engine.

(9) The spark-ignition type engine unit according to any one of (1) to (6) is configured such that
the throttle body is disposed such that a center line of the piston part intersects the center line of the intake passage in the throttle body, the center line of the piston part extending in the reciprocation direction of the piston part.

The combustion chamber of the spark-ignition type engine included in the spark-ignition type engine unit according to (9) has a diameter shorter than a stroke of reciprocating movement of the piston part when viewed in the reciprocation direction. This can suppress or reduce an increase in radial size of the cylinder part, which defines the combustion chamber. Therefore, the above configuration has a high degree of freedom in positioning the throttle body. Thus, in the case where the throttle body is disposed such that the center line of the piston part intersects the center line of the intake passage, it is possible to avoid a situation in which the intake passage is positioned such that generation of a fast tumble flow is hindered. Consequently, it is possible to enhance the degree of freedom in designing the distribution of the exhaust gas in the combustion chamber of the spark-ignition type engine 1.

### Reference Signs List

- 1: spark-ignition type engine
- 2: crankshaft
- 4: cylinder part
- 4r: combustion chamber
- 5: piston part
- 7: offset ignition plug (ignition plug)
- 7a: offset ignition part (ignition part)
- 41: cylinder head part
- 42: cylinder body part
- 41a, 241a, 341a: single center tumble port (SCTP)
- 41b: gas inlet
- 41e: exhaust port
- 41f: gas outlet
- 81: intake valve
- 82: exhaust valve
- 81c: valve surface portion
- 100, 200: straddled vehicle
- 114: intake pipe
- 115, 215: intake passage
- 116, 216: throttle body
- 116a: throttle valve
- 117: exhaust passage
- 118: exhaust pipe
- 119, 219, 319: catalyst unit
- 120: exhaust recirculation passage
- EU1, EU2, EU3: spark-ignition type engine unit
- NS: non-squish area

## Claims

1. A spark-ignition type engine unit comprising:
a cylinder part including a combustion chamber;
a piston part provided in the cylinder part, the piston part being movable in a reciprocating manner, the piston part defining the combustion chamber together with the cylinder part;
a crankshaft connected to the piston part, the crankshaft being rotatable in conjunction with reciprocating movement of the piston part;
one exhaust port that is provided to the cylinder part and communicates with the combustion chamber via a gas outlet, the one exhaust port being configured to allow exhaust gas from the combustion chamber to pass through the exhaust port;
one single center tumble port that is provided in the cylinder part and communicates with the combustion chamber via a gas inlet, the one single center tumble port having a separation enhancing part configured to cause gas being flown to the gas inlet to flow separate away from a wall surface leading to the gas inlet such that a tumble flow tumbling about an axis that extends in a direction intersecting the reciprocation direction is imparted to gas taken into the combustion chamber through the gas inlet, the gas inlet having an extending area that covers the gas outlet, the extending area being defined as an area having a width equal to a width of the gas inlet and extending from the gas inlet in a gas intake direction when viewed in the reciprocation direction of the piston part;
one exhaust valve configured to open or close the gas outlet;
one intake valve configured to open or close the gas inlet;
an ignition plug including an ignition part disposed in the combustion chamber, the ignition plug being configured to spark-ignite gas in the combustion chamber;
a throttle body including a throttle valve configured to regulate a flow rate of gas that is to be introduced into the combustion chamber;
an intake pipe connecting, without a surge tank, the throttle body and the one single center tumble port, the intake pipe allowing gas to pass through the intake pipe so that the gas travels from the throttle body to the one single center tumble port;
an exhaust pipe connected to an end of the one exhaust port, the end being opposite to the gas outlet, the exhaust pipe allowing exhaust gas discharged via the one exhaust port to pass through the exhaust pipe; and
an exhaust recirculation passage connecting the exhaust pipe or the exhaust port and the intake pipe or the single center tumble port, the exhaust recirculation passage being configured to supply recirculation gas, which is some of the exhaust gas taken out from the exhaust pipe or the exhaust port, to the intake pipe or the one single center tumble port so that, when the one intake valve opens the gas inlet, the recirculation gas is introduced via the separation enhancing part and the one single center tumble port together with gas having flowed through the throttle body, the intake pipe, and the one single center tumble port without passing through a surge tank, to generate the tumble flow in the combustion chamber.

2. The spark-ignition type engine unit according to claim 1, wherein
the ignition plug is further configured to spark-ignite the gas in the combustion chamber with the ignition part, which is positioned in a first area so as not to overlap a center passing line, the first area being one of two areas into which the combustion chamber is divided with the center passing line, the center passing line passing through a center of the gas outlet and a center of the gas inlet when viewed in the reciprocation direction.

3. The spark-ignition type engine unit according to claim 1 or 2, wherein
the exhaust pipe including a catalyst unit in which a catalyst for purifying exhaust gas discharged from the combustion chamber is stored, and
the exhaust recirculation passage is further configured to extract, as the recirculation gas, some of the exhaust gas at a location downstream of the catalyst unit in a flow of the exhaust gas.

4. The spark-ignition type engine unit according to any one of claims 1 to 3, wherein
the combustion chamber has a diameter shorter than a stroke of the reciprocating movement of the piston part when viewed in the reciprocation direction.

5. The spark-ignition type engine unit according to any one of claims 1 to 4, wherein
the cylinder part has a stroke capacity of 0.1 L or more and less than 0.2 L.

6. A vehicle comprising:
the spark-ignition type engine unit according to any one of claims 1 to 5; and
a vehicle wheel configured to be driven by the spark-ignition type engine unit.
